**Europäisches Patentamt**

**European Patent Office**

**Office européen des brevets**

(19)

(11) Veröffentlichungsnummer: **0 065 933**
**A2**

(12)  # EUROPÄISCHE PATENTANMELDUNG

(21) Anmeldenummer: **82810214.5**

(51) Int. Cl.³: **B 23 D 23/00**

(22) Anmeldetag: **19.05.82**

(30) Priorität: **21.05.81 CH 3308/81**
**02.11.81 CH 6987/81**

(43) Veröffentlichungstag der Anmeldung:
**01.12.82 Patentblatt 82/48**

(84) Benannte Vertragsstaaten:
**AT BE CH DE FR GB IT LI NL**

(71) Anmelder: **SCHWEIZERISCHE ALUMINIUM AG**

**CH-3965 Chippis(CH)**

(72) Erfinder: **Kälin, Anton**
**Tichelrütistrasse 10**
**CH-8044 Gockhausen(CH)**

(72) Erfinder: **Grabka, Joachim**
**Zweiackerstrasse 45**
**CH-8053 Zürich(CH)**

(72) Erfinder: **Bomholt, Jens**
**Marktstrasse 6**
**CH-8500 Frauenfeld(CH)**

(54) **Verfahren und Vorrichtung zum Aufteilen von Strängen in Pressbolzen.**

(57) Um beim Aufteilen von Strängen zu Pressbolzen das Entstehen von den Betrieb störenden kritischen Kurzstücken zu vermeiden, werden in der Abtrennanlage Restteile der Länge $2L - 2ls \geq R \geq 2ls$, vorzugsweise der Länge $L + ls \geq R \geq L - ls$, wobei L die Bolzensollänge ist und ls eine vorgegebene Länge bedeutet, welche länger als die Länge 1k eines kritischen Kurzstückes ist, in mindestens zwei Abschnitte unterteilt, von denen mindestens der vor der Trennstelle erzeugte Abschnitt eine Länge von ls bis $L - ls$ erhält. In einer ersten Ausführungsform erhält auch der nach der Trennstelle anfallende Abschnitt eine solche Länge und wird mittels einer Schiebevorrichtung (50) in eine Warteposition vorübergehend verschoben, wobei beide Abschnitte nacheinander mit einem aus der nächstfolgenden Stange abgetrennten Komplementärstück jeweils zu einem mehrteiligen Bolzen zusammengesetzt werden. In einer zweiten Ausführungsform werden nur vor der Trennstelle brauchbare Abschnitte, vorzugsweise der Länge $L - ls$, bzw. der Länge L, erzeugt und der jeweils nach der Trennstelle anfallende kritische Abschnitt abgeworfen, worauf der brauchbare Abschnitt mit einem Komplementärstück zu einem mehrteiligen Bolzen der Solllänge kombiniert wird. Anlagen und insbesondere Schiebevorrichtungen (50, 120) sowie Messvorrichtungen zur Durchführung dieses Verfahrens sind ferner beschrieben.

Fig 8

Verfahren und Vorrichtung zum Aufteilen von Strängen in
Pressbolzen

Die vorliegende Erfindung bezieht sich auf ein Verfahren zum Abtrennen von Pressbolzen vorgeschriebener Länge aus nacheinander zu einer Trennvorrichtung zugeführten Strängen, und ferner auf eine Abtrennanlage zur Durchführung dieses Verfahrens.

Bei der Erzeugung von Profilen durch Strangpressen wird das Vormaterial in Form von sogenannten Pressbolzen oder Pressbarren in den Rezipienten der Strangpresse eingesetzt. Diese Pressbolzen werden aus sogenannten Guss-Strängen oder Strangguss-Stangen, die mehrere Meter, z.B. 4 - 7 m Länge erreichen können, abgeschnitten. Die Länge der einzelnen Pressbolzen wird in Abhängigkeit des Materialbedarfs (Länge, Querschnitt) des momentan ausgepressten Profils gewählt. Die günstigste Bolzenlänge kann sich demnach beim Wechseln auf ein anderes Strangpress-Profil ändern. Um die beim Strangpressen entstehenden Materialabfälle zu reduzieren, können aber auch, hauptsächlich in der Anfangsphase des Pressens eines Auftrags bestimmter Profile, Längenanpassungen von aufeinander folgenden Pressbolzen zweckmässig werden, insbesondere um bei gegebener optimaler Auspresslänge der Profile den Pressrest schrittweise auf ein zulässiges Minimum zu reduzieren. Wenn die Pressbolzen im voraus in Standardlängen geschnitten werden, ist aber eine solche Optimierung der Bolzenlänge nicht durchführbar.

Für das Ablängen der Gussstränge sind zwei verschiedene Verfahren bekannt:

1. Mit einer Säge wird der Guss-Strang in kaltem Zustand in Pressbolzen der verlangten Länge unterteilt. Danach werden die Pressbolzen beim Durchgang durch einen Anwärmofen auf Presstemperatur erhitzt. Diese warmen Bolzen werden dann in diese Strangpresse geladen und verpresst.

2. Beim anderen Verfahren wird der Guss-Strang vor dem Unterteilen in einem Ofen leicht über Presstemperatur angewärmt. Beim Ofenausgang wird der Strang in warmem Zustand abgeschert. Danach werden die warmen Pressbolzen in die Presse geladen und verpresst.

Bei den bisher angewandten Verfahren zum Ablängen der Guss-Stränge können Probleme auftreten:

Nur in den seltensten Fällen ist die Gussstranglänge ein ganzzahliges Vielfaches der Bolzensollänge derart, dass der Strang sich in eine Anzahl Bolzen restlos unterteilen lässt. In den meisten Fällen entsteht nach Abtrennen einer bestimmten Anzahl Bolzen der Sollänge am Ende des Gusstranges ein kürzeres Reststück. Es besteht aber dann die Möglichkeit, einen Pressbolzen der Sollänge durch Zusammensetzen dieses Reststückes mit einem aus dem Anfang des nächsten Stranges abgeschnittenen Komplementärstück zu bilden. Solche zusammengesetzte Pressbolzen lassen sich wie einteilige Pressbolzen verpressen. Diese vorbekannte Arbeitsmethode führt jedoch in der Praxis zu Schwierigkeiten, sobald entweder das Reststück oder aber das benötigte Komplementärstück eine bestimmte kritische Länge lk unterschreitet.

Diese Schwierigkeiten können sowohl bereits beim Abtrennvorgang wie auch später beim Weiterbefördern auftreten: Zum Beispiel kann sich beim Abscheren das kurze Reststück in der Schere verklemmen und ist dann schwer zu entfernen. Ferner kann sich das Reststück beim Abtrennvorgang so verformen, dass seine Stirnfläche sich nicht mehr satt an die Stirnfläche des Komplementärstückes anlegen kann, was bei den aus so zusammengesetzten Bolzen erzeugten Profilen zu Qualitätseinbussen führt, wie sie etwa durch Lufteinschlüsse entstehen können. Abgesägte oder abgescherte kurze Reststücke können beim mechanisierten Fördern Schwierigkeiten bereiten, weil sie zum Umkippen neigen oder auch weil sie auf üblichen Fördermitteln, wie etwa Rollgänge, Kettenförderer oder Querförderer, sich verklemmen oder nach unten durchfallen können.

Wenn die Reststücke zu kurz ausfallen oder zu stark deformiert sind, als dass sie noch verpresst werden könnten, müssen sie von Hand entfernt werden.

Dasselbe gilt sinngemäss für die Komplementärstücke, so dass ein Reststück, das gegenüber der Bolzensollänge um einige cm, z.B. etwa 5 oder 10 cm, zu kurz ist, ebenfalls Probleme verursacht, weil es sich nicht nach dem Normalablauf ergänzen lässt.

Diese Komplikationen führen dazu, dass das Unterteilen von Guss-Strängen im Bereich der Stangenenden oft Ueberwachung oder manuelle Eingriffe durch den Bedienungsmann erfordert. Damit wird das Mechanisieren des Ablänges erschwert und personalgebunden.

Sowohl für das Reststück wie auch für das Komplementärstück besteht also eine kritische Länge, die nicht unterschritten werden darf. Als Richtwert für diese kritische Länge gilt etwa der halbe Bolzendurchmesser, wobei sich dieser Richtwert je nach Anlagenteil und -fabrikat nach unten oder oben verschieben kann.

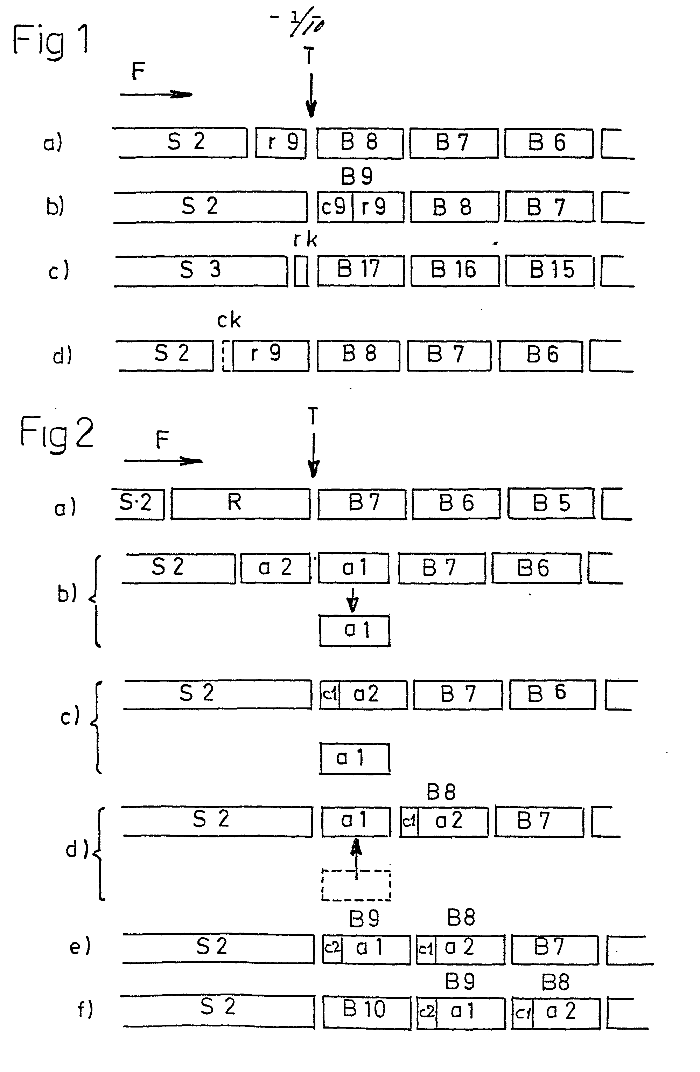

In der Fig. 1, a bis b, sind beispielsweise einige Fälle dargestellt, die in der Praxis beim Abtrennen nach bisheriger Praxis auftreten können. Mit Pfeil F ist die Materialflussrichtung und mit Pfeil T die Abtrennstelle angedeutet. In diesen Beispielen wurden die Verluste durch Sägespäne, die sich beim Abtrennen mit einer Säge ergeben, nicht berücksichtigt.

Beispiel a)

Es wird dabei angenommen, dass 600 cm lange runde Guss-Stränge mit 241 mm Durchmesser (einer der normierten Durchmesser) vorliegen, für welche in einer bestimmen Anlage die kritische Länge bei etwa 120 mm liegt. Bei diesen Strängen sind Fuss und Kopf, die vom Stranggiessen herrühren, bereits entfernt worden, so dass sie an beiden Enden glatte Stirnflächen aufweisen.

Für einen bestimmten Auftrag sind aus diesen Strängen 70 cm lange Pressbolzen abzutrennen.

Aus dem ersten Strang S1 lassen sich 8 Pressbolzen B1 bis B8 (= total 560 cm) abtrennen und es verbleibt ein Reststück r9 von 40 cm Länge (Fig. 1a). Aus dem zweiten Strang S2 wird dann ein Komplementärstück c9 von 30 cm abgetrennt, das mit dem Reststück r9 den zusammengesetzten Pressbolzen B9 bildet (Fig. 1b).

Der Strang S2 ist jetzt nur noch 600 - 30 = 570 cm lang. Daraus lassen sich wieder 8 Pressbolzen B10 bis B17 abtrennen und es verbleibt ein Rest rk von 10 cm (Fig. 1c). Dieses zu kurze und also kritische Reststück ist unbrauchbar und muss von Hand entfernt und zum Abfall bzw. Wiedereinschmelzen zugeführt werden.

Bei diesem Beispiel wird man beim dritten Strang so vorgehen wie beim ersten und es wird beim vierten Strang, also generell bei jedem zweiten Strang immer wieder ein unbrauchbares Reststück von 10 cm Länge entstehen.

In ähnlicher Art lässt sich für andere Strang- und/oder Bolzenlängen errechnen, dass bereits beim ersten, oder aber z.B. beim dritten oder vierten Strang ein unzulässig kurzes Reststück entstehen kann.

Beispiel b)

Für einen weiteren Auftrag beträgt die optimale Bolzenlänge 67,5 cm. Dann kann man aus dem ersten 600 cm langen Strang 8 Bolzen B1 bis B8 (= total 540 cm) abtrennen und es verbleibt ein Reststück r9 von 600 - 540 = 60 cm, das ein Komplementärstück ck von 7,5 cm Länge verlangen würde (Fig. 1d). Ein solches Komplementärstück liegt jedoch unter der kritischen Länge von 12 cm und bringt die obenerwähnten Schwierigkeiten mit sich. Man ist jetzt in einem Fall, wo bei jedem Strang ein Reststück von 60 cm für den normalen Ablauf unbrauchbar ist.

Man kann sich auch Fälle vorstellen, bei welchen einige Male zweiteilige Bolzen zusammengesetzt werden können und erst jeweils z.B. beim 5. oder 6. Strang ein Reststück entsteht, das ein Komplementärstück unter der kritischen Länge verlangen würde.

Bereits diese wenigen Beispiele zeigen, dass die in der Praxis bisher angewandte Trennmethode mit vielen Nachteilen behaftet ist, indem immer wieder spezielle Eingriffe zum Entfernen der unbrauchbaren Kurzstücke erforderlich sind.

Insbesondere ist aus Fig. 1 ersichtlich, dass bei der konventionellen Arbeitsweise ein kritisches Kurzstück, in Flussrichtung gesehen, immer hinter einem Stück brauchbarer Länge zu liegen kommt:

Im Fall von Beispiel a und Fig. 1c gilt dies für das nach Abtrennen des Bolzens B17 aus Strang Nr. 2 verbleibende Reststück rk von 10 cm Länge, welches z.B. bei einer im Anschluss an einen Ofen angeordneten Warmschere in deren Eingangsteil verbleibt und schwer zu entfernen ist, bzw. zum Warmhalten schwer oder unmöglich in den Ofen zurückzuführen ist.

Im Fall von Beispiel b und Fig. 1d liegt das aus dem nächsten Strang abgetrennte kritisch kurze Komplementärstück ck hinter dem Reststück r9 und bereitet dann beim Weitertransport zur Strangpresse Schwierigkeiten.

Diese Nachteile und Schwierigkeiten sollen nun durch die vorliegende Erfindung beseitigt werden, deren Aufgabe darin besteht, kritische Kurzstücke beim Aufteilen von sukzessiv einer Trennvorrichtung zugeführten Strängen in Bolzen vorgeschriebener Länge mindestens vor der Trennstelle vollständig zu vermeiden.

Diese Aufgabe wird dadurch gelöst, dass man - für den Uebergang - aus einem Restteil des vorangehenden Stranges, in Materialflussrichtung gesehen, mindestens vor der Trennstelle durch eine erste Abtrennoperation mindestens einen Abschnitt der Länge ls bis L-ls erzeugt und den nach der Trennstation anfallenden Abschnitt aus der Materialspur entfernt, worauf man vom nächsten Strang durch eine weitere Abtrennoperation mindestens ein Komplementärstück der Länge ls bis L-ls abtrennt und durch Zusammensetzen von solchen Abschnitten der besagten Länge mit solchen Komplementärstücken mehrteilige Bolzen der vorgeschriebenen Länge L für die Weiterverarbeitung bildet, wobei ls eine vorgegebene Sicherheitslänge ist, die grösser als eine kritische Länge lk ist, welche aufgrund der Gegebenheiten der zur Verfügung stehenden Anlage und der Grösse des Strangquerschnittes ermittelt wird.

Diese vorgegebene Länge oder Sicherheitslänge ls ist jedenfalls grösser als die kritische Länge lk, worunter die Länge eines Abschnittes verstanden wird, die nicht mehr zulässig ist, da sonst die im Zusammenhanmg mit der bisherigen Trennmethode aufgezählten Schwierigkeiten auftreten würden. Diese kritische Länge lk hängt von der Beschaffenheit des Materials ab, z.B. wenn das Abtrennen durch Warmscheren erfolgt, darf sich das abgetrennte Stück nicht unzulässig verformen oder in der Schere umkippen, - und ferner auch von den zur Verfügung stehenden Fördermitteln, z.B. wenn ein Rollgang vorhanden ist, darf das Stück darauf nicht umkippen oder zwischen den Rollen durchfallen. Auch die Bauart einer Warmschere kann die kritische Länge beeinflussen. Im allgemeinen liegt diese kritische Länge für Rundstangen bei etwa einem halben Durchmesser, bei Flachstangen bei etwa einer Hälfte des Höhenmasses der liegend zur Abtrennvorrichtung zugeführten Stange. Je nach Art der Anlage, insbesondere deren Fördermittel, kann diese kritische Länge $l_k$ bis zu 3/4, sogar bis zu 4/4 des Stangenhöhenmasses, bzw. -durchmessers betragen.

In der nachstehend beschriebenen ersten Ausführungsform der Erfindung verfährt man derart, dass man bei der ersten Abtrennoperation auf beiden Seiten der Trennstation mindestens einen Abschnitt der Länge $l_s$ bis $L-l_s$ erzeugt und aus der Materialspur in eine abseitige Warteposition vorübergehend verschiebt und in Zusammenhang mit einer nächsten Abtrennoperation wieder in die Materialspur zurückbringt und mit einem weiteren aus dem nächsten Strang abgetrennten Komplementärstück zu einem mehrteiligen Bolzen der vorgeschriebenen Länge L zusammensetzt.

Mit dieser Arbeitsmethode wird das Entstehen von kritischen Kurzstücken vollständig vermieden und das Aufteilen der Stränge erfolgt abfallos.

Insbesondere kann man dabei derart verfahren, dass man aus einem Strang soweit Bolzen der vorgeschriebenen Länge L abtrennt, bis am Strangende ein Restteil R entsteht, dessen Länge mindestens so gross ist wie zweimal die vorgegebene

Länge ls (R $\geq$ 2 ls), jedoch nicht länger ist als zwei vorgeschriebene Bolzenlängen minus zwei vorgegebene Längen (R $\leq$ 2 L - 2 ls) ist,

d.h. 2 L - 2 ls $\geq$ R $\geq$ 2 ls,

diesen Restteil in zwei Abschnitte unterteilt, die mindestens so lang wie die vorgegebene Länge ls, jedenfalls länger als die kritische Länge lk sind, den einen Abschnitt in eine abseitige Warteposition ·verschiebt, den anderen Abschnitt des Restteils mit einem aus dem nachfolgenden Strang abgetrennten Komplementärstück zu einem zweiteiligen Bolzen der vorgeschriebenen Länge L zusammensetzt und diesen weiterbefördert, dann den erstgenannten Abschnitt aus seiner Warteposition zurückholt und mit einem weiteren aus dem nachfolgenden Strang abgetrennten Komplementärstück zu einem weiteren zweiteiligen Bolzen der vorgeschriebenen Länge zusammensetzt. Darauf können aus dem zweiten Strang wieder einstückige Bolzen der vorgeschriebenen Länge abgetrennt werden, bis wieder ein Restteil der besagten Länge entsteht, usw.

In dieser Art werden mit Vorteil die Abschnitte vom Endteil des vorangehenden Stranges erzeugt und die Komplementärstücke vom Anfangsteil des nächsten Stranges abgetrennt, was auch die einfachste Vorrichtung verlangt. Man kommt aber nicht aus dem Rahmen der Erfindung, wenn man die Reihenfolge des Abtrennens ändert und zum Beispiel die Abschnitte aus der Stangenlänge irgendwo zwischen zwei einteiligen Bolzen abtrennt, sodass am Stangenende nur noch ganze Bolzen der vorgeschriebenen Länge entstehen, bzw. aus dem nachfolgenden Strang zunächst ein einteiliger Bolzen der Sollänge und erst später Komplementärstücke abtrennt. Solche Arbeitsarten bedeuten aber, dass mehrere Stücke in eine Warteposition zu überführen sind, und machen zusätzliche Wartepositionen erforderlich. Sie sind daher weniger vorteilhaft. Ebenfalls ist es möglich, die zusammengesetzten Bolzen aus mehr als zwei Bolzenteilen, z.B. aus drei Bolzenteilen zu bilden, aber auch dann sind zusätzliche Wartepositionen erforderlich. Trotzdem und wie die beschriebene Methode gestatten solche Verfahrensvarianten das Entstehen von kritischen Kurzstücken und die damit verbundenen Schwierigkeiten zu vermeiden, so dass sie ebenfalls die gestellte Aufgabe lösen.

Was die Unterteilung des Restteils R anbelangt, so kann dieser etwa in dessen Mitte vorgenommen werden, wodurch zwei Abschnitte praktisch gleicher Länge erzeugt werden, die auch ohne weitere Kontrolle beide genügend lang sind. Diese Unterteilung kann aber auch so durchgeführt werden, dass zwei Abschnitte von deutlich unterschiedlicher Länge entstehen. Wesentlich bleibt aber dabei, dass keiner dieser Abschnitte kürzer als die kritische Länge wird, bzw. ein Komplementärstück verlangt, das kürzer als die kritische Länge wäre. Eine solche ungleiche Unterteilung des Restes kann aber, wie später erläutert, durch geeignete Massnahmen durchaus beherrscht werden.

Das beschriebene Abtrennverfahren wird nachstehend anhand der Fig. 2 (a-f) und des Beispiels 1 näher erläutert.

Beispiel 1

Um den Vergleich mit der oben an hand von Beispiel a und Fig. 1 dargelegten Erörterung der bisherigen Abtrennweise zu erleichtern, wird wieder angenommen, dass 600 cm lange, runde Gussstränge mit normiertem 241 mm Durchmesser vorliegen, aus welchen für einen bestimmten Auftrag 70 cm lange Pressbolzen abzutrennen sind. Bei diesem Durchmesser liegt in einer bestimmten Anlage die kritische Länge lk bei 12 cm und die vorgegebene Länge ls wird bei 15 cm festgelegt.

Aus dem ersten Strang werden jetzt 7 Bolzen B1 bis B7 (= total 490 cm) abgetrennt (Fig. 2a). Es verbleibt ein Restteil R von 600 - 490 = 110 cm, der in zwei Abschitte von 55 cm unterteilt wird. Der eine, am einfachsten der erste dieser Abschitte, a1, wird in eine Warteposition seitlich verschoben (Fig. 2b). Der zweite Abschnitt a2 wird mit einem aus dem nächsten Strang abgetrennten Komplementärstück c1 von 70 - 55 = 15 cm zu einem zweiteiligen Bolzen B8 zusammengesetzt (Fig. 2c). Dann wird der erstgenannte Abschnitt a1 aus seiner Warteposition zurückgeholt (Fig. 2d) und ebenfalls mit einem aus dem nächsten Strang (S2) abgetrennten Komplementärstück c2 von 15 cm Länge zu einem zweiten 70 cm langen zweiteiligen Pressbolzen B9 zusammengesetzt (Fig. 2e).

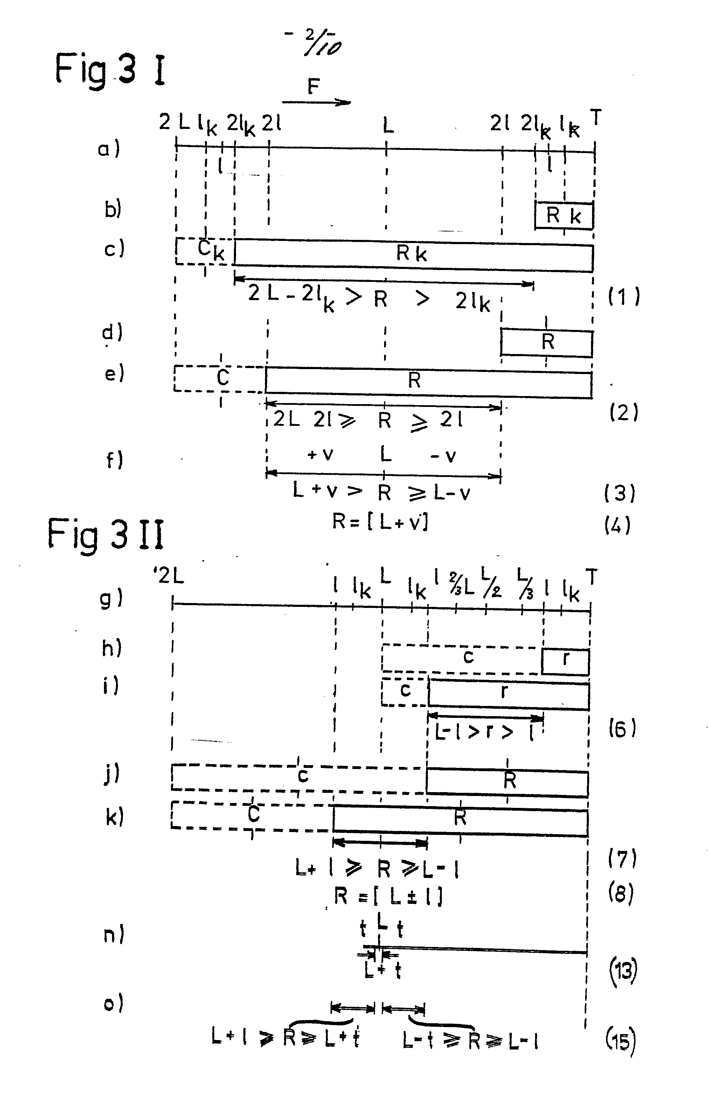

Im Anschluss daran weist der zweite Strang eine Länge von 600 - (2x15) = 570 cm auf. Es lassen sich daraus wieder 7 Bolzen (=total 490 cm) B10 bis B16 abtrennen (Fig. 3f) und es verbleibt ein Restteil von 570 - 490 = 80 cm, der in zwei Abschnitte von 40 cm Länge unterteilt wird, wobei der eine davon in die Warteposition gelangt. Diese Abschnitte

0065933

können nacheinander, wie schon beschrieben, mit aus dem dritten Strang abgetrennten 30 cm langen Komplementärstücken zu 70 cm langen zweiteiligen Bolzen zusammengesetzt werden.

Um Wiederholungen zu vermeiden und die Uebersicht zu erleichtern wird nachstehend dieses Vorgehen tabellarisch zusammengefasst. Dabei wird gesetzt:

A = Anfangslänge des Stranges

An = dito nach Abtrennen der Komplementärstücke

L = Bolzenlänge

B = Anzahl einteiliger Bolzen

R = Restteil, wird unterteil in zwei Abschnitte a1 und a2 gleicher Länge.

C = Anteil des nächsten Stranges für die beiden Komplementärstücke c1 und c2.

wobei $R = A - B \times L$, bzw. $R = An - B \times L$

$C = 2L - R$, (da $C + R = 2L$)

$An = A - C$

In der Tabelle ist in den Kolonnen a bzw. c auch die Länge der einzelnen Abschnitte bzw. Komplementärstücke angegeben.

## Tabelle I

A = 600 cm, L = 70 cm, 6L = 420 cm, 7L = 490 cm

| Strang Nr. | A,An cm | B Anzahl | R cm | a cm | C cm | c cm |
|---|---|---|---|---|---|---|
| 1 | 600 | 7 | 110 | 55 | 30 | 15 |
| 2 | 570 | 7 | 80 | 40 | 60 | 30 |
| 3 | 540 | 7 | 50 | 25 | 90 | 45 |
| 4 | 510 | 6 | 90 | 45 | 50 | 25 |
| 5 | 550 | 7 | 60 | 30 | 80 | 40 |
| 6 | 520 | 6 | 100 | 50 | 40 | 20 |
| 7 | 560 | 8 | - | - | - | - |

Zu dieser Tabelle ist folgendes zu bemerken:

a) Der Strang Nr. 7 mit Länge An = 560 cm lässt sich in 8 Bolzen restlos unterteilen, worauf der Vorgang bei Strang Nr. 1 wieder beginnt. Es wäre aber auch möglich, aus dem Strang Nr. 7 nur 7 einteilige Bolzen abzutrennen und den anfallenden 70 cm langen Restteil zwecks Bildung von zwei zusammengesetzten Bolzen aufzuteilen.

b) Bei allen Strangen sind die Abschnitte a, bzw. Komplementärstücke c mindestens so lang wie die vorgegebene Länge ls. Die kürzesten Stücke entstehen als 15 cm lange Komplementärstücke beim Uebergang von Strang Nr. 1 zum Strang Nr. 2. Es wäre auch möglich gewesen, aus Strang Nr. 1 8 Bolzen abzutrennen, was zu einem Restteil von 40 cm und daher zu zwei längeren Abschnitten von 20 cm Länge geführt hätte. Für die beiden Komplementärstücke wären aus dem Strang Nr. 2 100 cm benötigt worden, worauf dieser eine An-Länge von 500 cm aufgewiesen hätte. Nach Abtrennen von 6 Bolzen wäre man wieder auf einem Restteil von 80 cm angelangt, wie beim Strang Nr. 2 der Tabelle.

c) Bei den aufeinanderfolgenden Strangen verschiebt sich die Lage der Trennstellen gegenüber der vorderen Stirnfläche der Strange, so dass die Länge der Restteile entsprechend variiert.

Beispiel 2

In der nachstehenden Tabelle II wird im Vergleich zum Beispiel b und Fig. 1d angenommen, dass aus Strangen von 600 cm Länge 67,5 cm lange Bolzen abgetrennt werden. Die Bezeichnungen sind wie bei Tabelle I. Wie bei Beispiel 1 liegt die vorgegebene Länge ls bei 15 cm. Auch beträgt bei jedem Uebergang die Länge der einzelnen Abschnitte a und Komplementärstücke c die Hälfte der in der Tabelle aufgeführten Werte von R und C.

## Tabelle II

A = 600cm, L = 67,5cm 6L = 405cm, 7L = 472,5cm, 8L = 540cm

| Strang Nr. | A,An cm | B Anzahl | R cm | C cm |
|---|---|---|---|---|
| 1 | 600 | 8 | 60 | 75 |
| 2 | 525 | 7 | 52,5 | 82,5 |
| 3 | 517,5 | 7 | 45 | 90 |
| 4 | 510 | 6 | 105 | 30 |
| 5 | 570 | 7 | 97,5 | 37,5 |
| 6 | 562,5 | 7 | 90 | 45 |
| 7 | 555 | 7 | 82,5 | 52,5 |
| 8 | 547,5 | 7 | 75 | 60 |
| 9 | 540 | 7 | 67,5 | 67,5 |
| 10 | 532,5 | 7 | 60 | 75 |
| 11 | 525 | 7 | 52,5 | 82,5 |

(wie bei Strang Nr. 2)

Diese Tabelle II zeigt, dass mit der erfindungsgemässen Arbeitsweise Restteile entstehen, bzw. Komplementärlängen benötigt werden, die wenn unterteilt, Rest- bzw. Komplementärstücke ergeben, deren Länge mindestens so gross ist wie die vorgegebene Länge ls, jedenfalls grösser als die kritische Länge ($l_k$) ist. Im Gegensatz zum Beispiel b treten hier keine langen unbrauchbaren Reststücke mehr auf.

Da beim Strang Nr. 9 der Restteil die Solllänge von 67,5 cm aufweist, ist es auch möglich, dieser Restteil als einteiliger Bolzen weiter zu befördern. Der Abtrennvorgang wird dann mit der Situation von Stange 1 fortgesetzt.

Die Bedindungen der beschriebenen Ausführungsform, wo der Strangenrestteil R in zwei Abschnitte a1 und a2, vorzugsweise gleicher Länge, unterteilt wird und zwei aus dem nächsten Strang abgetrennte Komplementärstücke c benötigt werden, die zusammen einem Strangenanteil C entsprechen, sind in der Figur 3-I veranschaulicht, wo auch mit Pfeil T die Trennstelle und mit Pfeil F die Materialflussrichtung angedeutet sind.

In dieser Figur 3-I ist unter a vor der Trennstelle eine Strecke 2L entsprechend zwei Bolzenlängen L eingetragen und an den Enden dieser Strecke 2L die kritische Länge lk und die vorgegebene Länge ls, wobei ls $>$ lk, eingezeichnet.

In dieser Figur 3-I sind zunächt gezeigt:

b: einen bereits kritischen und daher unzulässigen kurzen Restteil Rk der Länge Rk = 2 lk, der wenn unterteilt zu zwei kritischen Abschnitten der kritischen Länge a = lk führen würde. Alle Restteile der Länge 2 lk und kürzer sind unbrauchbar.

c: einen ebenfalls bereits kritischen und daher unzulässigen langen Restteil Rk der Länge 2 L - 2 lk, der für die Komplementärstücke den Stranganteil $C_k$ = 2 lk beansprucht, was zwei kritischen Komplementärstücken ck der Länge ck = lk entsprechen würde. Alle Restteile der Länge 2 L - 2 lk und länger sind unbrauchbar.

Restteile, deren Länge sich aber innerhalb dieser Grenzwerte befinden, lassen sich erfindungsgemäss aufteilen und weiterverarbeiten. Als zulässiger Bereich gilt also

$$2 L - 2 \, lk > R > 2 \, lk \qquad (1)$$

Vorteilhafterweise verfährt man mit der vorgegebenen Länge oder Sicherheitslänge ls lk, welche gegenüber lk einen Sicherheitszuschlag aufweist. Demnach sind in der Figur ferner gezeigt:

d: einen zulässigen kurzen Restteil R der Länge R = 2 ls, welcher, wenn unterteilt, zu zwei zulässigen Abschnitten der Länge ls führt.

e: einen zulässigen langen Restteil der Länge R = 2 L - 2 ls, der nach Aufteilen für die Komplementärstücke den Stranganteil C = 2 ls beansprucht, was zwei zulässigen Komplementärstücken c der Länge ls entspricht.

In bezug auf diese vorteilhafterweise vorgegebene Länge ls ergibt sich für die zulässige Restteillänge der Vorzugsbereich:

$$2 L - 2 \, ls \geqq R \geqq 2 \, ls \qquad (2)$$

Aus dieser Darstellung ist ferner ersichtlich, dass in bezug auf die Mitte der Strecke 2 L, d.h. auf den Abstand L von der Trennstelle T, und wie unter $\underline{f}$ näher gezeigt, dieser Bereich symmetrisch ist, so dass es sich auch wie folgt formulieren lässt:

$$L + v \gtrless R \gtrless L - v \qquad\qquad (3)$$

(wo v = L - 2 ls)

d.h.: $\qquad R = [L \pm v] \qquad$ (R im Bereich $L \pm v$) $\qquad$ (4)

Restteile, deren hintere Stirnfläche innerhalb dieses Bereichs 3 bzw. 4 fällt und deren Länge also im Bereich (2) liegt, können bei der praktischen Durchführung des Verfahrens, wie anhand der Beispiele 1 und 2 gezeigt, mit einem guten Sicherheitsabstand gegenüber der kritischen Länge $l_k$ aufgeteilt und weiter verarbeitet werden.

Dabei kommt beim schrittweisen Verschieben des Stranges die hintere Stirnfläche eines kurzen Restteils in der Nähe der unteren Grenze L - v, diejenige eines langen Restteils in der Nähe der oberen Grenze L + v zu liegen. Um dies bei aufeinanderfolgenden Strängen zu gewährleisten, muss v mindestens so gross sein wie L/2, und also die Weite des Bereichs nach Formel 3 mindestens so gross wie eine Bolzenlänge L sein. Dies hat zur Folge, dass die Länge eines kürzeren Restteils R bzw. C-Anteils aus dem nächsten Strang höchstens L/2 und folglich die Länge der einzelnen Abschnitte a bzw. Komplementärstücke c höchstens L/4 betragen kann.

Die beschriebene Abtrennmethode, kann konsequent bei jedem Uebergang von einem Strang zu einem nächsten Strang vorgenommen werden. Dies führt aber dazu, dass bei jedem Uebergang immer wieder zwei zusammengesetzte Bolzen gebildet werden, welche für die Qualität der Profile doch nicht so günstig wie einteilige Bolzen sein können.

Es ist deshalb erstrebenswert, die Anzahl der zusammengesetzten Bolzen so weit als möglich zu reduzieren.

Vorteilhafterweise wird daher die beschriebene Abtrennmethode mit der konventionellen bisherigen Arbeitsmethode unter Bildung eines einzigen zusammengesetzten Bolzens pro Uebergang kombiniert, wodurch es bei gleichzeitiger vollständiger Vermeidung von kritischen Reststücken bzw. kritischen Komplementärstücken möglich wird, die Gesamtanzahl der zweiteiligen Bolzen zu reduzieren.

Diese kombinierte Arbeitsweise soll nachstehend anhand von Fig. 3-II näher erläutert werden:

In dieser Figur 3-II ist ein nicht zu unterteilendes Reststück mit r und ein zu unterteilender Restteil mit R bezeichnet.

Wichtig wird jetzt, dass die nicht zu unterteilenden Reststücke r eine geeignete zulässige Länge erhalten. Deshalb ist unter $\underline{g}$ auch ab Abstand L von der Trennstelle T, und zwar beidseitig davon, die vorgegebene Länge ls eingetragen.

0065933

Die anhand von Figur 3-I ausgestellte Formel

$$R = L \pm v \qquad (4)$$

gilt auch hier weiter, jedoch mit der Beschränkung v = 1s, so dass diese Formel jetzt lautet:

$$R = \left\lceil L \pm 1s \right\rceil \quad (R \text{ im Bereich } L \pm 1s) \qquad (5)$$

Die Figur 3-II zeigt unter

h: ein kurzes Reststück, dessen Länge grösser als 1s ist;
i: ein langes Reststück, dessen Länge kürzer als L-1s ist.

Reststücke, deren Länge r im Bereich

$$L - 1s > r > 1s \qquad (6)$$

liegt, werden in bekannter Art mit einem Komplementärstück c zur Bildung eines einzigen zusammengesetzten Bolzens pro Uebergang zusammengesetzt und zur Weiterverarbeitung weitergefördert.

Ferner ist gezeigt mit

j: ein kurzer Restteil R der Länge L - 1s;
k: ein langer Restteil R der Länge L + 1s.

Restteile, deren hintere Stirnfläche im Bereich

$$L + 1s \geqslant R \geqslant L - 1s \qquad (7)$$

d.h. im Bereich

$$R = \left[ L \pm ls \right] \tag{8}$$

liegt, werden, wie anhand von Figur 3-I erläutert, aufgeteilt, und jeder Abschnitt davon wird mit einem aus dem nächsten Strang abgetrennten Komplementärstück zusammengesetzt, derart, dass in solchen Fällen zwei zusammengesetzte Bolzen pro Uebergang gebildet werden.

Anhand der Darstellungen von h bis k ist ersichtlich, dass, wenn ls zuwächst, der für das Entstehen von Reststücken der Länge $L - v > r > ls$ zur Verfügung stehende Raum immer kleiner wird, und ab $ls = 1/2 \, L$ total verschwindet, so dass jeder Restteil unter Bildung von zwei zusammengesetzten Bolzen verarbeitet wird.

Im weiteren kommt, wenn die vorgegebene Länge ls so gewählt wird, dass sie grösser als ein Drittel der Bolzenlänge L ist ($ls > L/3$), dass ein Restteil entstehen kann, dessen hintere Stirnfläche sich entweder bei der Grenze $L - ls$ befindet und folglich dessen Länge kürzer als $2/3 \, L$ ist, so dass nach der Aufteilung die Abschnitte kürzer als $1/3 \, L$, also kürzer als ls sind, - oder aber dass diese hintere Stirnfläche sich bei der Grenze $L + ls$ befindet, wobei dann der Restteil länger als $4/3 \, L$ ist und nach dem Aufteilen die Abschnitte länger als $2/3 \, L$ sind, so dass dann Komplementärstücke benötigt werden, die kürzer als $1/3 \, L$, d.h. kürzer als die mit diesem Wert vorgewählte Länge ls sind.

Solange solche kurze Abschnitte bzw. Komplementärstücke noch länger als die kritische Länge $l_k$ sind, können solche

Werte von ls $> 1/3$ L noch in Kauf genommen werden, weil im Laufe eines Auftrages solche Fälle relativ selten auftreten, wie anhand der Beispiele ersichtlich.

Wenn es aber darauf gelegt wird, dass die Länge der Kurzstücke nie unterhalb der vorgegebenen Länge ls liegt, dann wird zweckmässigerweise die vorgegebene Länge ls nicht grösser als $1/3$ L gewählt:

$$ls \leq 1/3 \, L \tag{9}$$

Da die Anzahl der zweiteiligen Bolzen reduziert wird je kleiner ls ist, wird vorzugsweise als obere Grenze von ls der Wert 0,28 L eingehalten, d.h.

$$ls \leq 0,28 \, L \tag{10}$$

Nach unten muss jedenfalls nach wie vor ls $l_k$ sein. Für die in der Praxis meistens auftretenden Bolzenformate kommt man zu guten Ergebnissen, wenn die untere Grenze der vorgegebenen Länge ls bei 0,15 L, vorzugsweise bei 0,2 L, liegt, d.h.:

$$ls > 0,15 \, L \tag{11}$$
$$\text{vorzugsweise} \quad ls \geqslant 0,2 \, L \tag{12}$$

Gegebenenfalls kann es auch zweckmässig sein, ls $\geqslant 0,25$ L zu wählen.

Die kombinierte Arbeitsweise nach Fig. 3-II weist also gegenüber der Arbeitsweise nach Fig. 3-I den Vorteil auf,

dass man mit grösseren Werten der vorgegebenen Länge ls, d.h. bis 1/3 L statt bis 1/4 L arbeiten und damit umsomehr von der kritischen Länge $l_k$ Abstand nehmen kann. Dies bedeutet mit anderen Worten, dass man mit längeren Reststücken und Abschnitten, bzw. Komplementärstücken operieren kann, was je nach den zur Verfügung stehenden Fördermitteln der Abtrennanlage und dem Strangdurchmesser von entscheidender Bedeutung sein kann.

Es ist ferner ersichtlich, dass sowohl der Bereich

$$L + v \geqslant R \geqslant L - v$$

von Fig. 3-I wie auch der Bereich

$$L + ls \geqslant R \geqslant L - ls$$

von Fig. 3-II in seiner Mitte auch den Wert R = L einschliesst. Wenn einmal ein Restteil R gerade die passende Bolzensollänge aufweist, wird dieser Restteil zweckmässigerweise nicht aufgeteilt, sondern als einteiliger Bolzen zur Weiterverarbeitung weggefördert. Dabei kann, wie in Fig. 3-II unter n gezeigt, ein bestimmter Toleranzbereich

$$L \pm t \qquad\qquad (13)$$

beispielsweise mit $t \leqslant 5$ mm, vorzugsweise $t \leqslant 2,5$ mm, gegebenenfalls $t \leqslant 1,5$ mm berücksichtigt werden.

Infolgedessen ist der Restteil R zweckmässigerweise aufzuteilen, wenn er eine solche Länge aufweist, dass seine hintere Fläche in der Arbeitsweise nach Fig. 3-II in die Bereiche

$$(L + v) \geqslant R \geqslant (L + t) \text{ sowie } (L - t) \geqslant R \geqslant (L - v) \qquad (14)$$

und in der Arbeitsweise nach Fig. 3-II in die Bereiche

$$(L + ls) \geqslant R \geqslant (L + t) \text{ sowie } (L - t) \geqslant R \geqslant (L - ls) \qquad (15)$$

fällt, wie in der Fig. 3-II unter o gezeigt.

Bei schrittweisem Fortschreiten der aufeinanderfolgenden Stränge, jeweils um eine Bolzenlänge L, wird in der kombinierten Arbeitsweise bei den Strangenden die hintere Stirnfläche von Fall zu Fall entweder in den Bereich (6), oder in den Bereich (7) oder noch in den Toleranzbereich (13) fallen, was möglich ist, da zwischen der unteren Grenze ls und der obersten Grenze L + ls der Abstand L vorhanden ist.

Nicht zu unterteilende Reststücke mit einer Länge kürzer als ls entstehen dabei nie, weil zum Zeitpunkt der vorangehenden Abtrennoperation die hintere Stirnfläche des Stranges im Bereich (L + ls) bis (L + t) zu liegen kommt und dann der Restteil in zwei Abschnitte unterteilt wird.

Von diesen verschiedenen Richtlinien wird, wie später erläutert, bei der Anlage zur Durchführung des erfindungsgemässen Verfahrens Nutzen gezogen.

Die zunächst beschriebene Abtrennmethode sowie die kombinierte Arbeitsweise ist dann besonders vorteilhaft, wenn die Stränge in einem neben der Strangpresse angeordneten Durchlaufofen auf die für das Strangpressen erforderliche Temperatur aufgeheizt werden und die Pressbolzen mittels einer im Anschluss daran angebauten Warmschere aus den Strängen abgetrennt werden. Bei solchen Anlagen ist es zum Warmhalten des Stranges möglich, nach dem Abtrennen eines Bolzens den Strang in den Ofen zurückzufahren.

Bei einer für eine solche Anlage vorgesehenen Weiterentwicklung der Erfindung wird der in der Warteposition nach der Warmschere befindliche Abschnitt nach dem Entfernen der ersten zweiteiligen Bolzen aus dieser Warteposition zurückgeholt und zum Warmhalten in den Ofen zurückgeschoben. Wenn das Verpressen des ersten zweiteiligen Bolzens abgeschlossen ist und im weiteren Charge benötigt wird, dann werden Abschnitt und Strang vorgeschoben und am Strang das benötigte Komplementärstück abgetrennt.

Eine zweite vereinfachte Ausführungsform der Erfindung sowie eine dazu und z.T. auch zur ersten Ausführungsform des Verfahrens passende Vorrichtung soll weiter unten beschrieben werden.

Die Erfindung bezieht sich auch auf eine Vorrichtung zur Durchführung des erfindungsgemässen Verfahrens, und somit auf eine Abtrennanlage mit einer durch eine Säge, eine Warmschere oder dgl. gebildete Abtrennstation, einer Fördervorrichtung für die Zufuhr der nacheinander aufzuteilenden Stränge zur Abtrennstation und einer weiteren Fördervorrichtung für die Abfuhr der abgetrennten Stücke.

Im wesentlichen ist in einer solchen Abtrennanlage in Materialflussrichtung gesehen vor der Trennstation im Bereich des Zufuhrförderers eine Messeinrichtung zur Ermittlung der Länge des vor der Trennstelle T befindlichen Strangrestteils angeordnet, und es sind nach der Trennstation Mittel zum Entfernen von abgetrennten Stücken aus der Materialspur vorgesehen.

Weitere Einzelheiten der erfindungsgemässen Anlage samt zugehöriger Vorrichtungen sollen anhand der in den nachstehenden Figuren schematisch veranschaulichten Ausführungsbeispiele näher erläutert werden.

Es zeigen:

Fig. 4: Im Grundriss eine neben einer Strangpresse angeordnete Anlage zum Abtrennen von Pressbolzen aus Strängen in kaltem Zustand mittels einer Säge, mit eingegliedeter Vorrichtung zum Verschieben von Abschnitten in eine Warteposition.

Fig. 5: Eine Ansicht einer Ausführungsform der in der Anlage nach Fig. 4 eingebauten Vorrichtung zum Verschieben von Abschnitten in eine Warteposition.

Fig. 6: Eine Abwandlung einer Vorrichtung nach Fig. 4.

Fig. 7: Im Grundriss eine neben einer Strangpresse angeordnete Anlage zum Abtrennen von Pressbolzen aus Strängen in warmem Zustand mittels einer Warmschere, mit eingegliederter Vorrichtung zum Verschieben von Abschnitten in eine Warteposition.

Fig. 8: In Ansicht eine in einer Anlage nach Fig. 7 eingebaute Vorrichtung zum Verschieben von Abschnitten in eine Warteposition.

Fig. 9: a bis d: Eine Messeinrichtung in verschiedenen Ausführungsformen.

Fig.10: Ein Operationsablaufschema für die erste Ausführrungsform des Verfahrens.

Ferner:

Fig.11 Ein Operationsablaufschema für die zweite Ausführrungsform des Verfahrens.

Fig.12: In Seitenansicht und teils im Schnitt eine Warmschere mit angebauter Vorrichtung zum Abwerfen von Abschnitten nach der zweiten Ausführungsform des Verfahrens.

Fig.13: Eine Stirnansicht auf die Ausgangsseite der Warmschere nach Fig. 12.

Fig.14: Ein Horizontalschnitt durch eine mit einer auf der Höhe der Achse des feststehenden Scherrings angeordneten Messvorrichtung versehene Warmschere.

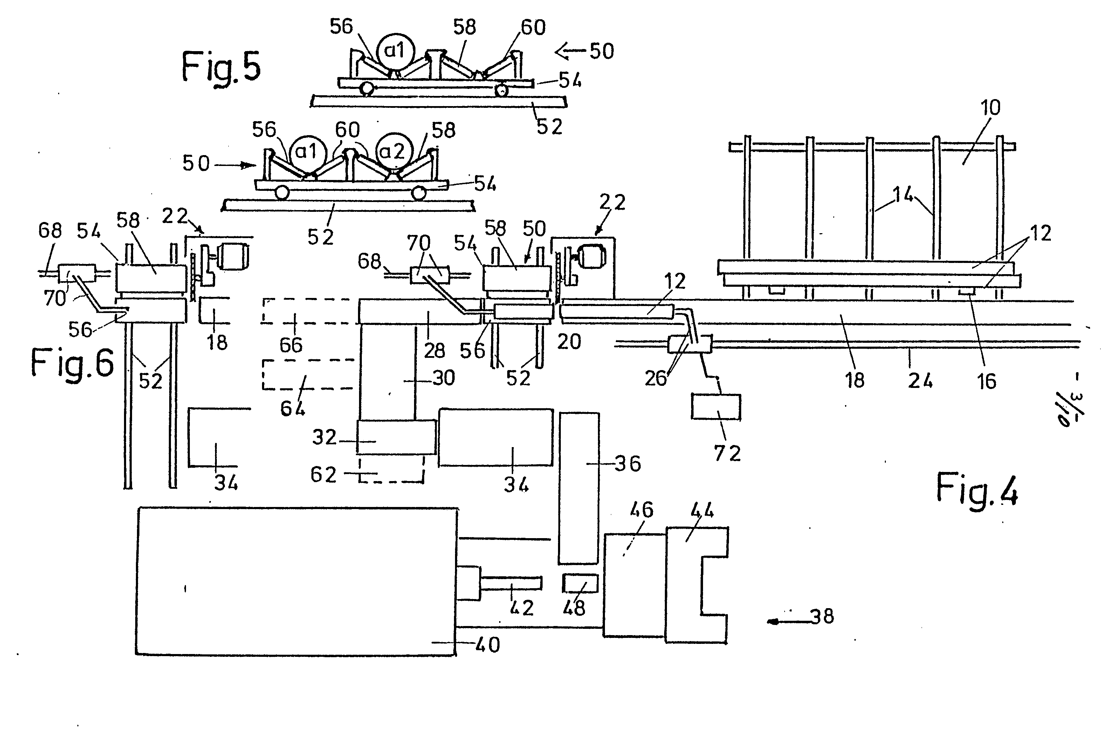

In einer Anlage herkömmlicher Art nach Fig. 4 befindet sich ein Magazin 10 für die zu verarbeitenden Stränge 12. Dieses Magazin ist üblicherweise durch leicht geneigte Balken 14 mit einer nicht gezeigten Vorrichtung zum Vereinzeln von Strängen und Arretierungen 16 gebildet, damit die Stränge, wenn durch die Arretierungen einzeln freigegeben, unter eigenem Gewicht einer Fördervorrichtung 18 übergeben werden können. In Abwandlung davon kann das Strangmagazin auch als Mehretagenmagazin ausgebildet sein, wobei die Stränge in mehreren Etagen übereinander gelagert sind und mittels einer nicht gezeigten Hebe- bzw. Absenkvorrichtung der Fördervorrichtung 18 zugeführt werden. Durch letztere werden die Stränge zum Abtrennen von einzelnen Bolzen 20, bzw. Bolzenteilen, schrittweise zu einer Säge 22 geführt, indem sie z.B. durch einen mittels eines Spindels 24 angetriebenen Stosser 26 oder durch sonst an sich bekannte Mittel vorwärtsgeschoben werden.

Durch weitere Transportvorrichtungen 28, 30 und 32 werden die abgetrennten Bolzen zu einem Durchlaufofen 34, z.B. einem Induktionsofen zugeführt, wo sie auf die für das Strangpressen erforderliche Temperatur erhitzt werden. Zu gegebener Zeit werden die Bolzen aus dem Ofen 34 genommen und mit der Uebergabevorrichtung 36 der Strangpresse 38 zugeführt. Diese besteht im wesentlichen aus dem Druckzylinderteil 40 mit Pressstempel 42, dem Jochteil 44 für die Matrize und dem Aufnehmerteil 46 zur Aufnahme des zu verpressenden Bolzens. Vor dessen Eintritt befindet sich üblicherweise noch eine entfernbare Bolzenladevorrichtung 48, auf welcher der presswarme Bolzen gelegt wird, bevor er durch den Stempel 42 in den Aufnehmer gestossen wird.

Eine solche Anlage ist nun erfindungsgemäss, in Materialflussrichtung gesehen, nach der Säge 22, d.h. auf der Transportstrecke zwischen der Säge 22 und der Strangpresse 38, vorzugsweise zwischen der Säge und dem Ofen 34, z.B. kurz nach der Säge 22, mit einer Vorrichtung 50 versehen, mit welcher abgetrennte Bolzenteile aus der normalen Materialflussspur in eine Warteposition und davon zurück in die normale Materialflussspur verschoben werden können.

Eine Ausführungsart für eine solche Vorrichtung 50 ist in Draufsicht in der Fig. 4 und in Frontansicht in der Fig. 5 veranschaulicht.

Diese Vorrichtung 50 besteht aus einem quer zur normalen Förderrichtung auf Laufschienen 52 verschiebbaren Wagen 54 mit zwei Aufnahmeschalen 56 und 58, die wahlweise in die normale Spur gebracht werden können, und selber, wenn erwünscht, mit angetriebenen Laufrollen 60 für die Weiterförderung der Bolzen oder Bolzenteile in deren Längsrichtung ausgerüstet werden können. Für diese Weiterförderung können aber auch Stösser vorgesehen werden.

Bei einer Betriebsart, bei der einteilige Bolzen abgetrennt werden und nach Möglichkeit beim Uebergang von einer Stange zur nächsten nur ein einziger zweiteiliger Bolzen gebildet wird, wie oben anhand von Fig. 3-II, h) und i), erläutert, befindet sich und verbleibt z.B. Aufnahmeschale 56 in der normalen Spur und übernimmt nach und nach vorübergehend die ein- bzw. zweiteiligen Bolzen.

Handelt es sich aber darum, aus einem Strangrestteil einen Abschnitt (a1) abzutrennen, der in eine Warteposition zu verschieben ist, so wird dieser Abschnitt einer der Schalen, z.B. ebenfalls der Aufnahmeschale 56 übergeben, worauf der Wagen 54 derart verschoben wird, dass jetzt die Aufnahmeschale 58 in der normalen Spur steht. Dieser Aufnahmeschale 58 wird nun das Reststück des Stranges (= Abschnitt a2) sowie der Anfang dem nächsten Strang zugeführt, aus der ein erstes Komplementärstück (c1) abgetrennt wird, worauf der somit gebildete zweiteilige Bolzen auf der normalen Spur weitertransportiert wird (vgl. Fig. 5). Danach wird der Wagen 54 zurückgeschoben, wodurch der erstgenannte Abschnitt a1 aus seiner Warteposition wieder in die normale Spur zurückgebracht wird. Dann wird aus dem genannten nächsten Strang wieder ein Komplementärstück (c2) auf der Schale 56 abgetrennt, wodurch ein zweiter zweiteiliger Bolzen gebildet wird, der zum Ofen und zur Strangpresse weiterbefördert werden kann. Darauf können wieder in bekannter Art einteilige und einzelne zweiteilige Bolzen abgetrennt und weiterbefördert werden, und zwar so lange, bis die Notwendigkeit auftaucht, nacheinander zwei zweiteilige Bolzen zu bilden und der verschiebbare Wagen 54 deshalb wieder in Betrieb zu setzen ist, usw..

Eine ähnliche Schiebevorrichtung kann aber auch, wie mit 62 angedeutet, an dem vor dem Ofen 34 befindlichen Längsförderer 32 angebaut werden, wo die zweiteiligen Bolzen dann zusammengesetzt werden. Ebenfalls ist es möglich, eine ähnlich wirkende Vorrichtung, wie mit 64 angedeutet, am Querförderer 30 anzubringen, wobei dann die Verschiebung der Abschnitte in ihre Warteposition und daraus zurück durch eine Bewegung in deren Längsrichtung zu erfolgen hat.

Der mit zwei Aufnahmeschalen ausgerüstete Wagen 54 kann aber auch wie in Fig. 6 gezeigt, auf Querschienen 52 verschoben werden, die sich vom Bereich der Fördervorrichtung 18 und Säge 22 bis vor den Durchlaufofen 30 erstrecken, und somit den Querförderer 30 ersetzen.

In weiteren Ausführungsformen des verschiebbaren Wagens können die Aufnahmeschalen übereinander angeordnet sein, wobei dann die Verschiebung des Wagens in vertikaler Richtung zu erfolgen hat.

Im Weiteren ist es möglich, für die Warteposition einen weiteren in der Verlängerung des Förderers 28 eingebauten Längsförderer 66 vorzusehen. Zu einer solchen Warteposition und davon zurück werden die Abschnitte in ihrer Längsrichtung verschoben. Trotzdem kann dabei in bezug auf die normale Spur von einer abseitigen Warteposition gesprochen werden.

Ferner ist es möglich, die Abschnitte mit einer Zange zu fassen und vorübergehend in eine Warteposition in ausreichendem Abstand oberhalb oder sonst abseits der normalen Spur zu heben, bzw. zu verschieben.

Für ein genaues Ablängen von einzelnen einteiligen Bolzen bzw. Bolzenteilen, seien es Abschnitte aus einem Strangrestteil oder Komplementärstücke, wird zweckmässigerweise der Strang, gegebenenfalls mit dem davor liegenden Bolzenteil bis zu einem an sich bekannten, ein- und ausschwenkbaren, auf einer Laufschiene 68 verschiebbaren und dort richtig eingestellten Anschlag 70 vorgeschoben, worauf der Abtrennvorgang vorgenommen wird. In bekannter Art ist es auch möglich, für den Abtrennvorgang den Strang mittels einer Haltevorrichtung festzuhalten, nachdem der Strang schrittweise mit einer anderen, jeweils um eine Bolzenlänge hin- und herfahrbaren Vorrichtung, z.B. einer Zange, bei offener Haltevorrichtung vorgeschoben wurde.

Für die Durchführung der erfindungsgemässen Massnahmen muss aber zusätzlich festgestellt bzw. ermittelt werden können, welche Länge der Strangrestteil bzw. das Reststück nach Abtrennen einer gewissen Anzahl einteiliger Bolzen aufweist, bzw. aufweisen wird, damit zum richtigen Zeitpunkt entschieden werden kann, wie das Abtrennprogramm am Strangende vorzunehmen ist. Hierzu ist eine besondere Messeinrichtung 72 angeordnet, die vorzugsweise in Verbindung mit dem Stosser 26 arbeitet und weiter unten näher erläutert ist.

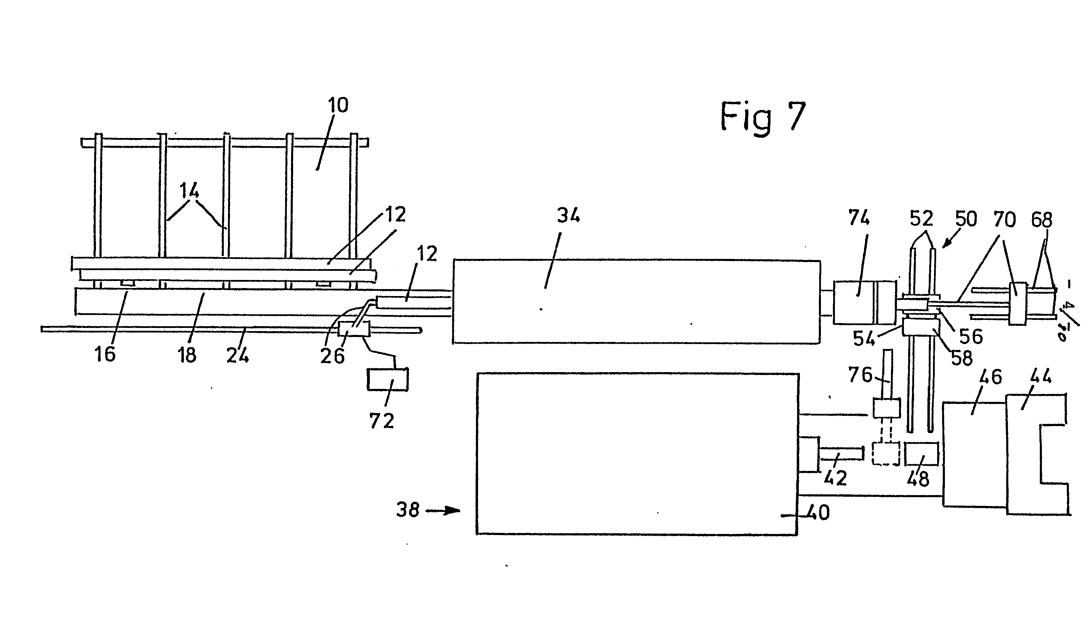

In einer Anlage nach Fig. 7 werden aus einem Magazin 10 die Stangen 12 über eine Fördervorrichtung 18 zu einem z.B. elektrisch oder durch Flammen beheizbaren und gegebenenfalls mit einer inneren Fördervorrichtung ausgerüsteten Durchlaufofen 34 zugeführt, wo sie auf die für das Strangpressen notwendige Temperatur erhitzt werden. In Anschluss an diesen Durchlaufofen ist eine Warmschere 74 angeordnet, mit welcher aus den Strängen einteilige Bolzen 20 bzw. zusammenzusetzende Bolzenteile abgetrennt werden, die der Strangpresse 38 zugeführt werden.

In einer solchen Anlage ist im Anschluss an die Warmschere 74 erfindungsgemäss eine Vorrichtung 50 angeordnet, mit welcher Bolzenteile vorübergehend in eine Warteposition verschoben werden können.

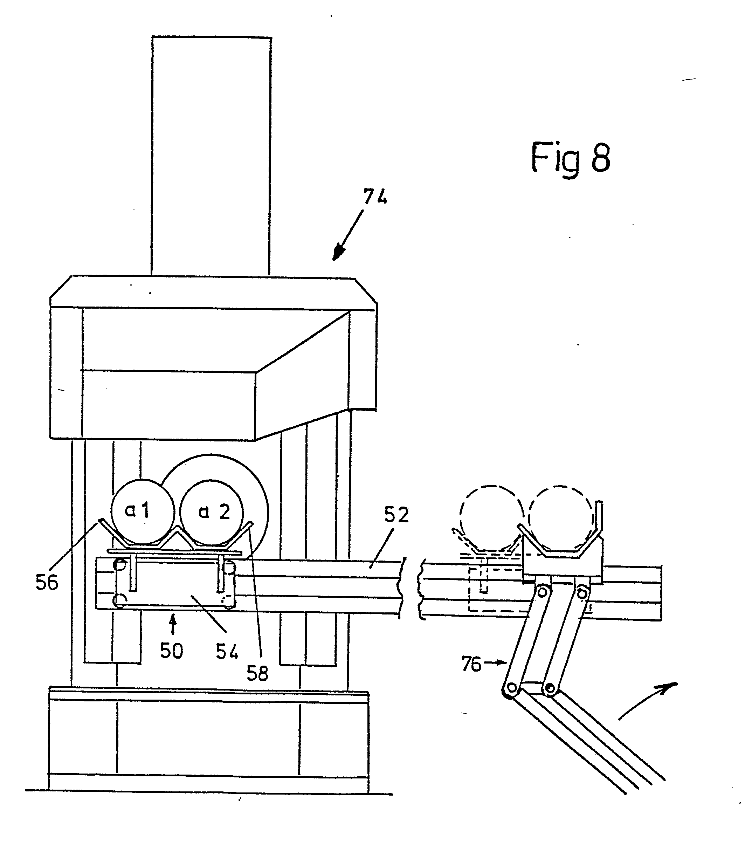

Diese in Fig. 8 abgebildete Vorrichtung 50 besteht aus einem auf einer Laufschiene 52 fahrbaren Wagen 54, der mit zwei Aufnahmeschalen 56 und 58 ausgerüstet ist, wobei diese wahlweise vor den Austritt der Warmschere 74 verfahrbar sind und eine davon als Warteposition benützt werden kann. Die Funktionsweise dieses verschiebbaren Wagens 54 ist ähnlich wie beim Wagen 54 nach Fig. 5 beschrieben. Für die Uebergabe der Bolzen aus einer der Schalen zur Strangpresse 38 ist die angedeutete schwenkbare Bolzenladevorrichtung 76 vorgesehen. Die Uebergabe der ein- oder mehrteiligen Bolzen von den Aufnahmeschalen 56 und 58 auf die Ladevorrichtung 76 erfolgt durch Verschieben in axialer Richtung, durch Ueberrollen oder durch eine mechanische Greifvorrichtung.

Ebenfalls vorhanden bei der Anlage nach Fig. 7 und 8 ist ein auf Laufschienen 68 verschiebbarer und einstellbarer Anschlag 70 sowie eine weiter unten näher erläuterte einstellbare Messvorrichtung 72.

Im weiteren kann der Anschlag 70 auch als Stosser ausgebildet sein, damit ein in der Warteposition befindlicher Abschnitt in den Ofen zurückgeschoben werden kann, bis der nächste Bolzen benötigt wird. Es kann dazu aber auch ein gesonderter Stosser vorgesehen sein.

Sowohl für den Fall des Kalt- wie auch des Warmabtrennens wurden in den Figuren 4 bis 8 verschiebbare Vorrichtungen gezeigt und beschrieben, die mit zwei Aufnahmeschalen ausgerüstet sind, wovon eine davon als Warteposition benützt werden kann, wie für die bevorzugte Ausführungsform des erfindungsgemässen Verfahrens erforderlich. Sollte es aber erwünscht sein, eine grössere Anzahl Wartepositionen zur Verfügung zu haben, dann besteht die Möglichkeit, den verschiebbaren Wagen mit zusätzlichen Aufnahmeschalen zu versehen, oder auch eine gesonderte Warteposition vorzusehen, zu der die Abschnitte oder Bolzenteile mittels eines auch einschaligen Wagens oder durch sonstige Mittel überführt werden und davon zu gegebener Zeit auch wieder zurückgeholt werden.

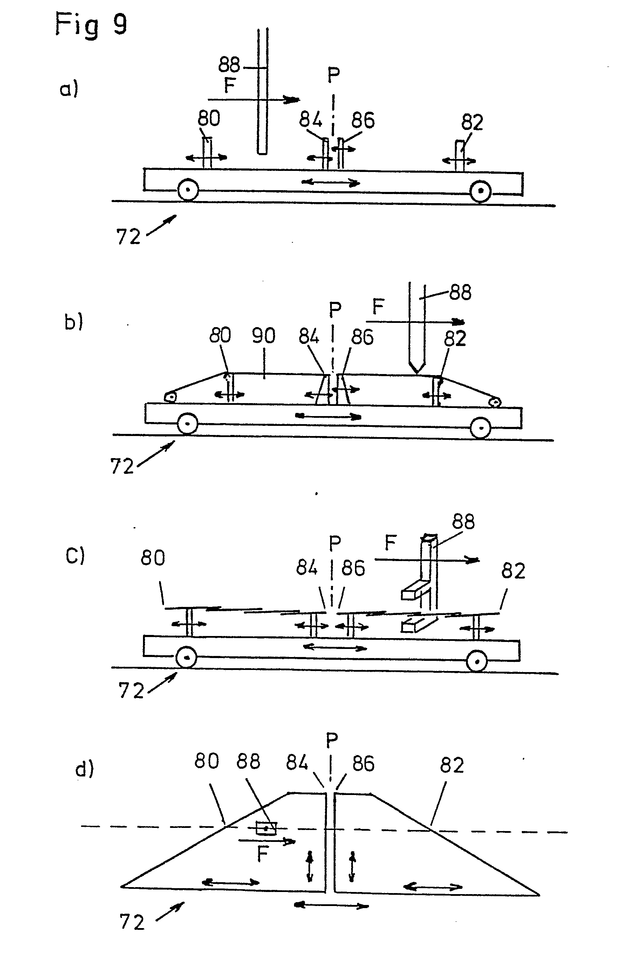

In der Fig. 9 ist das Prinzip einer in Zusammenhang mit den Figuren 4 und 7 erwähnten Messeinrichtung 72 zum Auslösen der zur Durchführung des erfindungsgemässen Verfahrens notwendigen Schritte gezeigt.

Diese Messeinrichtung besitzt zwei gegen einen Nullpunkt P aus- und zueinander verschiebbare Begrenzer 80 und 82, welche im jeweils gewünschten Abstand v oder ls vom Nullpunkt P einstellbar sind und somit den früher definierten Bereich L ± v, oder L ± ls begrenzen.

Im weiteren ist die Messvorrichtung vorteilhafterweise mit zwei weiteren ebenfalls einstellbaren Begrenzern 84 und 86 versehen, welche den Toleranzbereich L ± t bestimmen.

Mit dieser Anordnung werden an der Messeinrichtung durch die Begrenzer 80 und 84 bzw. 86 und 82 die Bereiche (L + ls) bis (L + t) und (L - t) bis (L - ls) gebildet, die für das Aufteilen eines Restteils in zwei Abschnitte massgebend sind.

Zusammen mit dieser Messvorrichtung wirkt ein Fühler 88.

Es besteht die Möglichkeit, die Messvorrichtung an einem mitbewegten Bestandteil der Stangenvorschubvorrichtung, z.B. am Träger des Stossers 26 anzubringen und den Fühler 88 in dem Sinne ortsfest zu montieren, dass er nur noch auf die jeweils gewünschte Bolzensollänge L einstellbar ist.

Die Messvorrichtung kann aber auch ortsfest angeordnet und der Fühler 88 mit einem mitbewegten Bestandteil der Stangenvorschubvorrichtung, z.B. mit dem Stosser 26 gekoppelt sein, derart, dass er dessen Lage und damit die Lage der hinteren Stirnfläche einer Stange wiedergibt. Der Nullpunkt P der Messvorrichtung 72 ist dann ebenfalls verschiebbar, damit er dem jeweils gewünschten Wert der Bolzensollänge L angepasst werden kann.

Auch ist es möglich, den Fühler 88 mit einem weiteren in Fig. 9 nicht dargestellten z.B. optischen oder mechanischen Fühler zu koppeln, welcher die Lage der hinteren Stirnfläche unmittelbar abtastet.

Als Fühler und Begrenzer kommen z.B. an sich bekannte Mittel in Betracht, die auf elektromechanischem Weg wie Schalter, oder auf kapazitivem, oder induktivem oder noch optoelektrischem Weg aufeinander wirken.

Wie in der Fig. 9a gezeigt, können die Begrenzer in der Reihenfolge 80, 84, 86, 82 bei Vorschub des Fühlers 88 in der Materialflussrichtung gemäss Pfeil F die Befehle ein-aus-ein-aus erteilen, derart, dass, wenn bei für einen bestimmten Abtrennvorgang stillstehendem Strang der die Lage der hinteren Stirnfläche dieses Stranges angebende Fühler 88 in einem der Bereiche 74-78 oder 80-76 liegt, die Einrichtung die Vorgänge zum Aufteilen eines Restteils auslöst.

In den in Fig. 9b, 9c und 9d dargestellten Ausführungsvarianten der Vorrichtung werden die variablen Bereiche (L + ls) bis (L + t) und (L - t) bis (L - ls) durch materielle Mittel verkörpert und z.B. durch jeweils über zwei Begrenzer gespannte Bänder 90 (Fig. 9b) oder durch in der Art einer Blende 92 arbeitende aufeinanderschiebbare Lamellen, deren Ende als Bereichsgrenzen wirken (Fig. 9c), oder noch durch inbezug auf die Spur des Fühlers 88 querverschiebbare Flächen in Form von rechteckigen Trapezen 94 (Fig. 9d) gebildet.

In dieser Art können für jeden Bereich z.B. für einen elektrischen Fühler 88 je eine in ihrer Länge veränderliche Kontaktfläche bzw. für einen mit einer Photozelle versehenen Fühler 88 je eine ausdehnbare Blendenfläche gebildet werden.

Wenn einmal der bei einem Abtrennvorgang stillstehende Fühler 88 im elektrischen oder optischen Kontakt mit einem der Bänder 90, Blenden 92 bzw. trapezförmigen Flächen 94 steht, löst die Einrichtung die Vorgänge zum Aufteilen eines Restteiles aus.

Andere Mittel zur Bildung der in Rede stehenden veränderlichen Bereiche sind im Rahmen der Erfindung möglich.

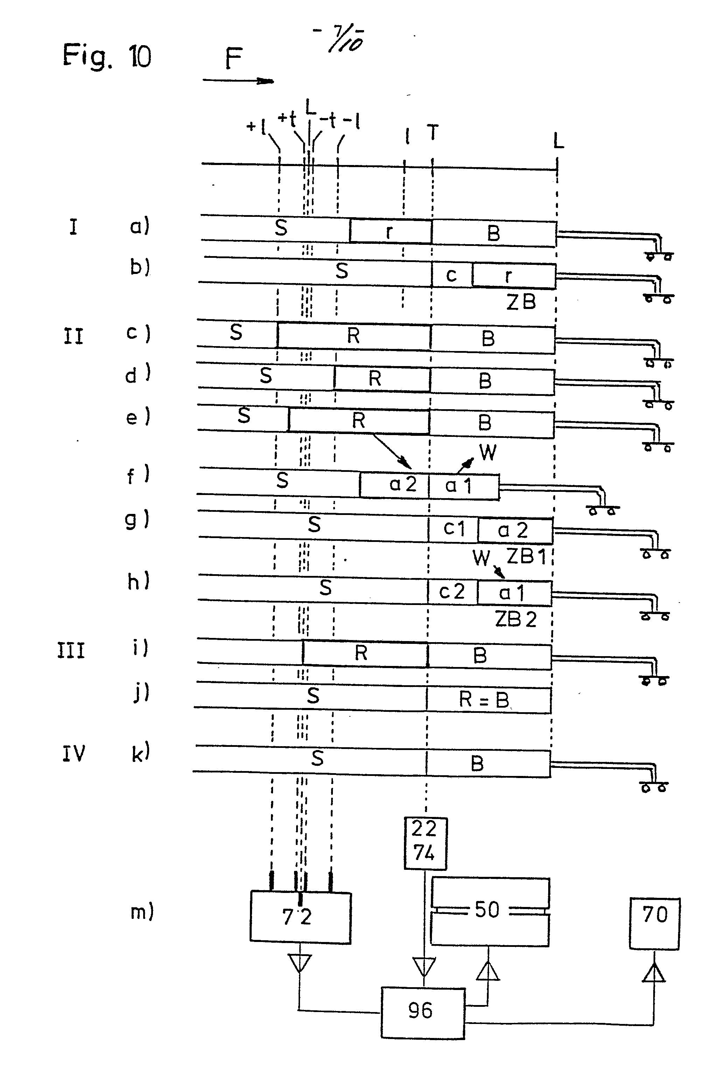

Der Ablauf eines in der erfindungsgemässen Abtrennanlage durchgeführten, kombinierten Abtrennvorgangs beim Uebergang von einem Strang zu einem nächsten Strang sowie die Funktionsweise der Messvorrichtung 72 sind in der Figur 10 dargestellt.

Mit Pfeil F ist die Materialflussrichtung angegeben und mit Pfeil T die Abtrennstelle lokalisiert. Auf beiden Seiten von T ist eine Bolzenlänge L eingezeichnet.

Auf der Ausgangsseite ist mit B ein einteiliger Bolzen, mit ZB ein zusammengesetzter Bolzen und mit c ein Komplementärstück bezeichnet. Ein Reststück ist mit r und ein Restteil mit R angedeutet, dieser Restteil R wird in zwei Abschnitte a1 und a2 unterteilt, S bedeutet die nächste Stange.

In der Figur sind ferner unten angedeutet:
- der verschiebbare Anschlag 70
- die Vorrichtung 50 zum Verschieben von Abschnitten in eine Warteposition
- die Messeinrichtung 72, deren Nullpunkt P auf den Abstand L vor der Trennstelle T eingestellt ist und deren Abgrenzer in Abständen ± 1s bzw. ± t zum Nullpunkt eingestellt sind und somit die Arbeitsbereiche der Einrichtung bestimmen,
- die Steuerungsvorrichtung 96
- die Trennvorrichtung 22 oder 74
sowie deren Verkopplungen untereinander.

Im Hinblick auf die verschiedenen auftretenden Situationen wird nach der kombinierten Abtrennmethode für die Uebergänge von einer Stange auf die nächstfolgende die Anlage wie folgt betrieben:

## Fall I

Länge des Reststücks r im Bereich $L - ls > r > ls$; es wird pro Uebergang ein einziger zusammengesetzter Bolzen gebildet.

## Darstellungen a und b

a) Position des Anschlags 70 im Abstand L von der Trennstelle (kurz: Anschlag bei L), Strangende bis zum Anschlag vorgeschoben; Abtrennen und Wegbefördern des Bolzens B. Länge des Reststücks r: beilspielsweise etwas kleiner als $L - ls$, also ausserhalb des Bereichs $L \pm ls$. Aufgrund der Feststellung der Messvorrichtung gibt die damit gekoppelte Steuerungsvorrichtung keinen besonderen Befehl ab.

b) Fortsetzung von a), Anschlag weiterhin bei L; Reststück r durch den nächsten Strang S bis zum Anschlag vorgeschoben; Abtrennen des Komplementärstücks c unter Bildung eines zusammengesetzten Bolzen ZB, der wegbefördert wird.

## Fall II

Länge des Restteils R im Bereich L + ls $\geqslant$ R $\geqslant$ L - ls, mit Ausnahme von R = L $\pm$ t, d.h. hintere Stirnfläche des Restteils in einem Bereich (L + ls) bis (L + t) oder (L - t) bis (L - ls); es werden pro Uebergang zwei zusammengesetzte Bolzen gebildet.

## Darstellungen c, d und e

Jeweils Anschlag bei L, Strangende bis zum Anschlag vorgeschoben; Abtrennen des Bolzens B, der weggeführt wird. Durch die Messvorrichtung ermittelte Länge des Restteils R:

bei c: R = L + ls

bei d: R = L - ls

bei e: R innerhalb des Bereichs L + ls $\geqslant$ R $\geqslant$ L - ls, beispielsweise etwas kleiner als L + ls.

Da in diesem Fall der Restteil aufzuteilen ist, löst die mit der Messeinrichtung 72 gekoppelte Steuervorrichtung nach Wahrnehmung dieser Situation, d.h. dieser Länge des Restteils eine Verschiebung des Anschlags 70 in Richtung auf die Trennstelle, vorzugsweise um den Betrag L - R/2, aus, was jede weitere Längenkontrolle überflüssig macht. Ferner wird für die Schiebevorrichtung 50 der Weg für die Verschiebung freigegeben.

## Darstellung f (Fortsetzung von c, d oder e, insb. von e)

Anschlag bei L - R/2; Restteil bis zum Anschlag vorgeschoben; Abtrennen des Abschnitts a1; nach erfolgtem Abtrennvorgang und Rückfahren des Anschlags in die Position "Anschlag bei L" wird die freigegebene Schiebevorrichtung 50 auf Signal der Trennvorrichtung seitlich verschoben, womit der Abschnitt a1 in die Warteposition gelangt.

Darstellung g (Fortsetzung von f)

Anschlag bei L; Abschnitt a2 durch den nächsten Strang S bis zum Anschlag vorgeschoben; Abtrennen des Komplementärstücks c1; Abführen des zusammengesetzten Bolzens ZB1 = a2 + c1.

Darstellung h (Fortsetzung von g)

Abschnitt a1 durch Zurückschieben der Vorrichtung 50 aus seiner Warteposition zurückgeholt; Anschlag bei L; Abschnitt a1 durch den nächsten Strang S bis zum Anschlag vorgeschoben; Abtrennen eines zweiten Komplementärstücks c2. Abführen des zweiten zusammengesetzten Bolzens ZB2 = a1 + c2.

Fall III

Länge des Restteils R im Bereich L ± t. Dieser Restteil wird als einteiliger Bolzen weiterbefördert.

Darstellung i

Anschlag bei L, Strangende bis zum Anschlag vorgeschoben; Abtrennen des Bolzens B, der weggeführt wird. Die Messvorrichtung stellt die Länge des Restteils R = L ± t fest, worauf die Steuerungsvorrichtung den Befehl erteilt: Beim nächsten Vorwärtsschritt des Stranges "Anschlag weg".

Darstellung j (Fortsetzung von i)

Der Weg ist für das Weiterbefördern von Restteilen R = L ± t frei.

Fall IV

Abtrennen von einteiligen Bolzen.

Darstellung k (Fortsetzung von b, h oder j)

Anschlag bei L; Strang bis zum Anschlag vorgeschoben; Abtrennen eines einteiligen Bolzens und Wiederholen dieses Vorgehens ohne Eingreifen der Messvorrichtung 72 bis wieder ein Reststück nach Fall I oder ein Restteil nach Fall II bzw. III entsteht.

*****

Beim oben beschriebenen Fall II wird, um den Restteil in seiner Mitte zu trennen und dabei zwei Abschnitte a1 und a2 gleicher Länge zu erzeugen, der Anschlag um den Betrag L - R/2 verschoben, d.h. um einen variablen Betrag, da die Restlänge R auch unterschiedlich ausfällt. Hierbei ist zur Steuerung des Anschlags ein Spezialrechner erforderlich.

In Abwandlung davon und unter Vermeidung eines Spezialrechners ist es auch möglich, sofern das Verhältnis von "Bolzen-"höhe" (Bolzendurchmesser) zur Bolzenlänge es gestattet, für das Aufteilen eines Restteils den Anschlag immer wieder auf die gleiche Stelle zu verschieben, und zwar bis zum Abstand L/2 von der Trennstelle bzw. in der Nähe davon. Es entstehen dann nach der Trennstelle jedesmal Abschnitte a1 der Länge L/2 oder ungefähr dieser Länge, welche etwa so lange und deshalb ebenfalls unkritische Komplementärstücke verlangen, wobei die vor der Trennstelle befindlichen Abschnitte a2 eine variable Länge aufweisen, die genau oder ungefähr zwischen L + ls - L/2 und L - ls - L/2, d.h. zwischen L/2 + ls und L/2 - ls liegt. Sofern L/2 - ls grösser als ls, d.h. L/2 grösser als 2 ls ist,

$$L/2 > 2 \, ls \qquad (16)$$

entstehen immer unkritische Abschnitte a2, und es werden dafür Komplementärstücke c2 benötigt, die mit Sicherheit ebenfalls unkritisch sind.

Die <u>Darstellung m</u> zeigt sehr schematisch die wesentlichsten Kopplungen zwischen Messvorrichtung 72, Trennstelle 22 oder 74, Steuervorrichtung 96, Schiebevorrichtung 50 und Anschlag 70 zur Durchführung der unter Fall II, Darstellungen f-h, erwähnten Schritte. Insbesondere muss die Trennvorrichtung 22,74 mit der Messvorrichtung 72 über die Steuerungsvorrichtung 46 gekoppelt sein, damit aufgrund der Feststellungen der Messvorrichtung 72 die Schiebevorrichtung 50 und der Anschlag 70 zu dem jeweils zutreffenden Zeitpunkt verschoben werden.

Wenn in Abweichung vom geschilderten Ablauf konsequent bei jedem Uebergang mehrere mehrteilige, insbesondere zwei zweiteilige Bolzen gebildet werden, dann müssen in Anwendung der Lehre von Figur 3-I an der Messvorrichtung die Begrenzer in einem solchen Abstand v vom Nullpunkt eingestellt werden, der grösser als 0,5 L, jedoch nicht grösser als L - ls, jedenfalls kleiner als L - lk ist, damit keine Kurzstücke der kritischen Länge oder darunter entstehen.

In beiden Fällen, d.h. entweder wenn konsequent für jeden Uebergang zwei (oder mehr) zusammengesetzte Bolzen gebildet werden, oder aber diese Arbeitsweise mit der Bildung eines einzigen zusammengesetzten Bolzens pro Uebergang kombiniert ist, kann man den vorgegebenen Wert ls in genügendem Abstand von der kritischen Länge lk wählen, dass die Kurzstücke nie nahezu kritisch ausfallen.

Dieser Sicherheitsabstand zwischen ls und lk kommt besonders dann zum Tragen, wenn ein Warmscheren im Anschluss an einen Durchlaufofen vorgenommen wird und die Lage der hinteren Stirnfläche des Reststücks bzw. des Restteils nicht, oder aber aus sonstigen Gründen schlecht zu ermitteln ist und diese Ermittlung auf indirektem Weg am hinteren Ende einer anstossenden weiteren Stange stattfindet, deren Länge gemessen und mitberücksichtigt wird. Obwohl man dabei auch die Wärmeausdehnungen der Stange im Durchlaufofen ebenfalls mitberücksichtigen kann, so sind die dabei auftretenden Toleranz-Abweichungen ohne Einfluss, da sie durch einen genügend gross gewählten vorgegebenen ls-Wert aufgefangen werden, und sie sich auch nicht addieren, da die Ermittlung der Länge eines Rests bei jedem Strangende frisch erfolgt.

Wenn es in Abwandlung der in Fig. 9g und h veranschaulichten Arbeitsmethode erwünscht ist, den zusammengesetzten Bolzen nicht gleich zwischen Trennstelle und Anschlag, sondern an einer weiteren Stelle der Abtrennanlage zu bilden, dann können aus der Stange S die Komplementärstücke jedes für sich allein abgelängt und abgetrennt werden. Hierzu ist der Anschlag 70 ebenfalls in Richtung auf die Trennstelle, z.B. um den Betrag R/2, zu verschieben. Diese Aufgabe kann ebenfalls der mit der Messvorrichtung gekoppelten Steuerungsvorrichtung überlassen werden.

Ein derartiges Vorgehen kann insbesondere dann erwünscht sein, wenn ein Warmscheren im Anschluss an einen Durchlaufofen vorgenommen wird. Es ist dann möglich, für den zweiten zusammengesetzten Bolzen zuerst das Komplementärstück c2 abzutrennen und auf die freie Aufnahmeschale zu legen und erst dann den ersten Abschnitt aus seiner Warteposition zurückzuholen, indem bei der Uebergabe auf die Bolzenladevorrichtung 78 zunächst das Komplementärstück c2 und erst nachher der Abschnitt a1 hinter c2 verschoben wird.

Damit wird erreicht, dass das wärmere Komplementärstück c2 den Kopf des zweiten zusammengesetzten Bolzens bildet, was an sich erwünscht sein kann.

Diese gegebenenfalls erwünschte Reihenfolge der Bolzenteile a1 - c2 inbezug auf die Pressrichtung lässt sich insbesondere in einer Anlage nach Fig. 7 und 8 auch mit einer Schiebevorrichtung 50 erreichen, bei der die Aufnahmeschalen 56 - 58 gemeinsam auf einer Drehplattform auf dem Schiebewagen 54 montiert sind.

Beim Abtrennvorgang gelangen auf eine Aufnahmeschale die Bestandteile in der Reihenfolge (c1 - a2) bzw. (c2 - a1), mit den Abschnitten a2 bzw. a1 nach vorne, wie mit den Darstellungen g und h von Fig. 10 gezeigt. Dann wird die Gruppe der Aufnahmeschalen um 180° gedreht, damit die Bestandteile c1 bzw. c2 nach vorne liegen, worauf der jeweils gebildete zusammengesetzte Bolzen weiterbefördert wird.

Statt dessen kann man aber auch, wie an sich bekannt, die einteiligen oder mehrteiligen Bolzen einzeln in einem in Nähe der Strangpresse angeordneten Durchlaufofen auf die richtige Presstemperatur bringen, bzw. dort eine an sich ebenfalls vorbekannte sogenannte "Kopfheizung" vornehmen.

Eine solche Drehbewegung, die gegebenenfalls auch bei Kaltsägen erwünscht sein kann, kann in einer Anlage nach Fig. 4 stattfinden, wenn der Wagen zunächst aus dem Bereich des Hauptförderers 28 seitlich herausgefahren worden ist. In einer Anordnung nach Fig. 6 kann die Drehbewegung beim Verschieben zwischen Säge 22 und Ofen 30 und bei einer Anordnung nach Fig. 7 - 8 unterwegs zwischen Warmschere 74 und Ladevorrichtung 76 stattfinden.

Im weiteren, wenn Anpassungen der Bolzenlänge am Anfang eines Auftrags oder auch später erforderlich sind, genügt es, die Messvorrichtung 72 entsprechend zu verschieben und ihren Nullpunkt P auf den neuen L-Wert einzustellen.

Mit dem nachstehenden Ausführungsbeispiel soll gezeigt werden, wie ein kombinierter Abtrennvorgang nach Fig. 10 vor sich geht.

Beispiel 3

Es wird wie bei den früheren Beispielen wieder angenommen, dass 600 cm lange Stränge mit 241 mm Durchmesser vorliegen, von denen jetzt nach der kombinierten Arbeitsmethode nach Fig. 10 73 cm lange Bolzen abzutrennen sind. Die kritische Länge liegt bei etwa 12 cm; und es wird eine vorgegebene Länge ls von 15 cm (ensprechend 0,62 D, bzw. 0,21 L) festgelegt.

Die sich daraus ergebende Aufteilung ist in der nachstehenden Tabelle III angegeben, wo A, An, B, R und C die gleiche Bedeutung wie bei Tabelle I besitzen und in den Kolonnen r und c die Längen der nicht aufgeteilten Reststücke bzw. der entsprechenden Komplementärstücke angegeben sind. Die Länge der beim Aufteilen der Restteile in ihrer Mitte entstehenden einzelnen Abschnitte a1 und a2 bzw. der entsprechenden Komplementärstücke c1 und c2 ergibt sich einfach durch Halbieren der in Kolonnen R und C angegebenen Werte. Statt die Restteile zu halbieren, kann man bei diesem Ausführungsbeispiel ebenfalls die weiter oben in Abwandlung der Methode nach Fall II (Fig. 10, II, c-h) beschriebene Trennart verwenden und aus den Restteilen R Abschnitte a1 der Länge L/2 = 36,5 cm abtrennen; wobei Abschnitte a2 unterschiedlicher Restlänge auftreten. Die Komplementärstücke c1 und c2 (wobei c1 + c2 = C) erhalten dann automatisch die geeignete unkritische Länge. Diese abgewandelte Abtrennart ist hier möglich, weil mit 36,5 cm L/2 grösser ist als 2 ls = 30 cm (Formel Nr. 16).

Auch hier werden durch Sägespäne entstehende Längenverluste nicht berücksichtigt. Ein solches Aufteilungsprogramm lässt sich spanlos durch Warmscheren erreichen.

## Tabelle III

$A = 600$ cm, $L = 73$ cm, $2L = 146$ cm,
$6L = 438$ cm, $7L = 511$ cm, $8L = 584$ cm

| Strang Nr. | A,An cm | B Anzahl (einteil.) | R cm | r cm | C cm | c cm | 2-teilige Bolzen, Anzahl |
|---|---|---|---|---|---|---|---|
| 1 | 600 | 8 | -- | 16 | -- | 57 | 1 |
| 2 | 543 | 7 | -- | 32 | -- | 41 | 1 |
| 3 | 559 | 7 | -- | 48 | -- | 25 | 1 |
| 4 | 575 | 7 | 64 | -- | 82 | -- | 2 |
| 5 | 518 | 6 | 80 | -- | 66 | -- | 2 |
| 6 | 534 | 7 | -- | 23 | -- | 50 | 1 |
| 7 | 550 | 7 | -- | 39 | -- | 34 | 1 |
| 8 | 566 | 7 | 55 | -- | 91 | -- | 2 |
| 9 | 509 | 6 | 71 | -- | 75 | -- | 2 |
| 10 | 525 | 6 | 87 | -- | 59 | -- | 2 |
| 11 | 541 | 7 | -- | 30 | -- | 43 | 1 |
| 12 | 557 | 7 | -- | 46 | -- | 27 | 1 |
| 13 | 573 | 7 | 62 | -- | 84 | -- | 2 |
| 14 | 516 | 6 | 78 | -- | 68 | -- | 2 |
| 15 | 532 | 7 | -- | 21 | -- | 52 | 1 |
| 16 | 548 | 7 | -- | 37 | -- | 36 | 1 |

usw.

Da die beiden für Tabelle III gesetzten Ausgangswerte 600 und 73 cm keinen gemeinsamen Teiler haben, wird rein rechnerisch erst beim 74. Strang der Zustand von Strang No. 1 wieder erreicht.

Bereits am Beispiel der in der Tabelle III aufgeführten 16 ersten Stränge lässt sich folgendes bemerken:

1. Das kürzeste Kurzstück ist bei Strang Nr. 1 als nicht zu unterteilendes 16 cm langes Reststück entstanden.

2. Angenommen, die vorgegebene Länge wäre statt bei 15 cm bei 20 cm (entsprechend 0,83 D, bzw. 0,27 L) festgelegt worden, wäre dieses 16 cm lange Reststück nicht entstanden.

Die Anlage hätte aus Strang Nr. 1 nur 7 einteilige Bolzen statt 8 abgetrennt und es wäre ein aufzuteilender Restteil von 89 cm entstanden, was für die Komplementärstücke 57 cm aus dem Strang Nr. 2 beansprucht hätte; somit hätte die Länge des kürzesten Kurzstücks 57 cm : 2 = 28,5 cm betragen. Anschliessend hätte Strang Nr. 2 ebenfalls eine Länge von 543 cm, wie der Strang Nr. 2 der Tabelle III aufgewiesen.

Mit einer vorgegebenen Länge ls von 20 cm wäre es nicht möglich, die abgewandelte Abtrennart anzuwenden, weil mit 36,5 cm L/2 kleiner als 2 ls = 40 cm ist. Es würden dann unzulässig kurze Kurzstücke (kürzer als 20 cm) entstehen.

3. Man kann sich auch vorstellen, dass am Anfang des Auftrages die im Hinblick auf einen minimalen Pressrest günstigste Bolzenlänge noch nicht vorbekannt war und dass man zunächst in der Optimierungsphase die Strangpresse sukzessiv mit je einem Bolzen von 77, 75 und 74 cm Länge beschickte, bis beim vierten Bolzen die richtige Bolzenlänge mit 73 cm vorlag.

Hierzu wird aus dem ersten Strang 4 + 2 + 1 = 7 cm mehr benötigt, als wenn von Anfang an 73 cm lange Bolzen abgetrennt werden.

Folglich werden nach Abtrennen der Komplementärstücke alle Stangen von der zweiten weg in ihrer Länge An um 7 cm kürzer. Der Strang Nr. 5 erhält dann eine Länge An von 511 cm und lässt sich genau in 7 einteilige Bolzen aufteilen, nachdem nach Abtrennen von 6 Bolzen ein Restteil von 73 cm entsteht, der sich als einteilige Bolzen verwenden lässt.

Für den sechsten Strang liegt dann die gleiche Lage wie für Strang Nr. 1 der Tabelle III, d.h. eine Anfangslänge von 600 cm vor.

In ähnlicher Art bleiben aus irgendwelchen Gründen stammende Längsabweichungen der zur Verfügung stehenden Stränge ohne Einfluss. In jedem Fall ist es möglich, Stränge unterschiedlicher Länge aufzuteilen, ohne dass dabei unerwünschte Kurzstücke entstehen. Ebenfalls bleiben in gleicher Art die beim Abtrennen durch Sägen die dem Sägespalt entsprechenden Längenverluste ohne Einfluss auf den Ablauf des Abtrennprozesses.

Die beschriebene erste Ausführungsform des Verfahrens und die entsprechende Abtrennanlage sind für einen automatischen Betrieb sehr gut geeignet und erbringen auch die höheren Vorteile, weil sie eine optimale, abfallose Unterteilung der Stränge ermöglichen. Sie erfordern jedoch einen relativ hohen apparativen Aufwand und entsprechende Wartungs- und Unterhaltskosten, vor allem, wenn das Abtrennen mittels einer Warmschere an in einem Ofen vorgeheizten Strang angewandt wird. Es ist nämlich dann praktisch erforderlich, den ersten vorerwähnten, in eine Warteposition verschobenen Abschnitt zum Warmhalten in den Ofen zurückzuführen, was die Einschaltung zusätzlicher Operationen und entsprechender Einrichtungen verlangt.

Es hat sich daher als zweckmässig erwiesen, für Anwendungsfälle, bei denen nicht so hohe Ansprüche gestellt werden bzw. gestellt werden können, die erste Ausführungsform des Verfahrens derart zu vereinfachen, dass die Abtrennanlage trotzdem automatisch, d.h. ohne manuelles Eingreifen, betrieben werden kann, wobei bei der Verarbeitung von Stangenrestteilen das Enststehen von kritischen Kurzstücken derart gesteuert wird, dass der normale Prozessablauf nicht gestört wird und manuelle Eingriffe vermieden werden.

Diese Aufgabe wurde dadurch gelöst, dass sobald Stangenreste entstehen, die beim nächsten Abtrennvorgang zu einem kritisch kurzen Reststück führen würden, bzw. ein kritisch kurzes Komplementärstück verlangen würden, man von dem in Materialflussrichtung gesehen vorderen Ende dieses Stangenrestes einen solchen Abschnitt abtrennt, dass die Restlänge unkritisch ist, bzw. ein unkritisches Komplementärstück verlangt, und dass man den abgetrennten Abschnitt als Abfall abführt. Das heisst, es werden nur auf der Eingangsseite der Trennstelle brauchbare Abschnitte mit einer Länge von ls bis L - ls, insbesondere der Länge L - ls erzeugt, wobei, wenn Restteile anfallen, die länger als eine vorgeschriebene Länge L sind, aus diesen ebenfalls brauchbare Abschnitte der Länge L erzeugt werden können.

Weil im Gegensatz zu der eingangs beschriebenen vorbekannten Arbeitsweise die kritischen Kurzstücke beim Abtrennvorgang - in Materialflussrichtung gesehen - nicht hinter, sondern jetzt vor dem brauchbaren Abschnitt entstehen, sind sie leicht zu entfernen und stören daher den normalen Prozessablauf nicht, selbst wenn sie in bestimmten Fällen eine zusätzliche Abtrennoperation verursachen, die ohne weiteres während des Strangpressens eines vorher abgetrennten Bolzens erfolgen kann.

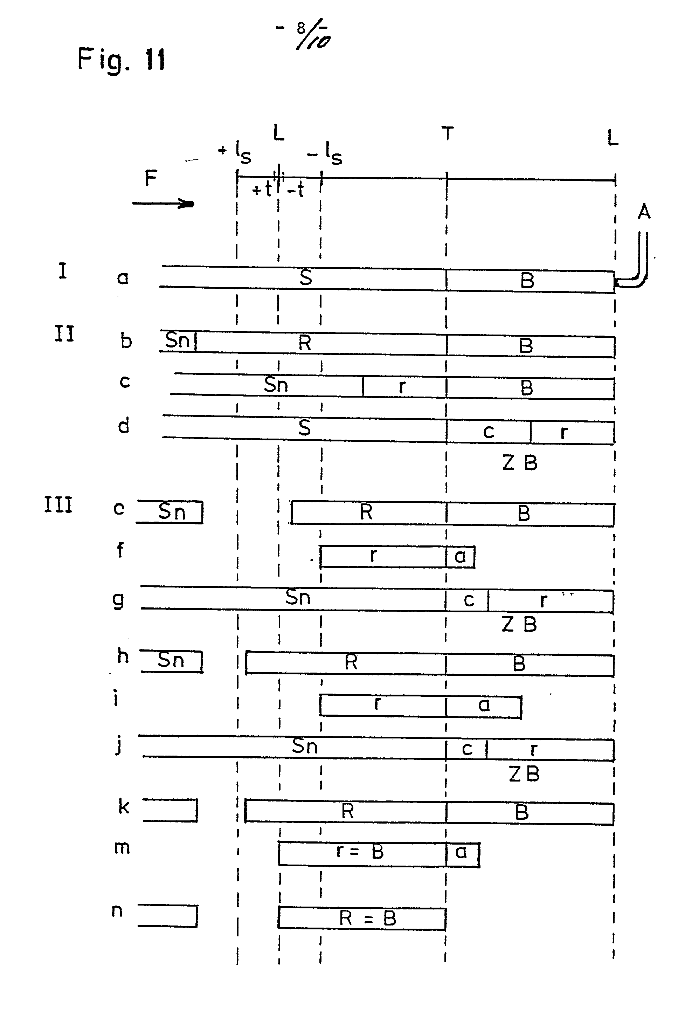

Dieses Vorgehen soll nun an Hand der Fig. 11 im Rahmen eines Abtrennprozesses näher erläutert werden.

In dieser schematischen Darstellung ist wieder mit Pfeil F die Materialflussrichtung angedeutet und mit T die Abtrennstelle lokalisiert. Auf beiden Seiten von T ist eine Bolzenlänge L und, vor der Trennstelle, beidseitig vom L-Punkt, die Sicherheitslängen +ls eingezeichnet.

Es bedeuten ferner:

B : einen einteiligen Bolzen

ZB: einen zusammengesetzten Bolzen

R : den Restteil einer Stange

S : eine Stange

Sn  eine anschliessende Stange

r : ein Reststück (oder brauchbarer Abschnitt)

c : ein Komplementärstück

A : den Anschlag

Im Hinblick auf die verschiedenen Situationen, die bei nacheinander zur Trennstelle zugeführten Stangen entstehen können, wird wie folgt verfahren:

Fall I': Ausgangslage

Darstellung a:

Es liegt ein frischer Strang S vor. Diese wird schrittweise bis zum im Abstand L von der Trennstelle T eingestellten Anschlag A vorgeschoben und es werden nach und nach Bolzen B der Länge L abgetrennt, bis am Strangende ein Restteil R verbleibt, der kürzer als 2L ist.

Je nach Länge des Restteils R treten dann folgende Situationen vor:

## Fall II':

### Darstellungen b bis d:

Der Restteil R ist länger als L + ls (b), jedoch höchstens so lang wie 2L - ls, da Restteile mit einer Länge zwischen 2L - ls und 2L aufgrund der Verarbeitung nach Fall III' nicht auftreten können. Nach dem nächsten Vorschub um einen Bolzenlänge bis zum Anschlag A kann ein Bolzen B der Länge L abgetrennt werden und es verbleibt ein Reststück r, das länger als die Sicherheitslänge ls ist und also brauchbar ist (c). Nach dem nächsten Vorschub bis zum Anschlag A wird aus der nächsten anstossenden Stange Sn ein Komplementärstück c der Länge L - r abgetrennt und dadurch mit dem Reststück r ein zusammengesetzter Bolzen ZB gebildet, der zur Strangpresse weiterbefördert werden kann.

## Fall III':

### 1) Darstellungen e bis g:

Der Restteil R weist eine Länge auf, die mindestens L - ls und höchstens L + ls beträgt. Es handelt sich dabei um einen kritischen Restteil, der erfindungsgemäss zu verarbeiten ist. Zum Beispiel kann diese Länge zwischen L - ls und L liegen, wie unter e gezeigt.

Dann wird zur Erzeugung eines brauchbaren Reststücks r das erfindungsgemässe Abtrennen eines Abschnittes am vorderen Ende des Restteils R eingesetzt: Dieser Restteil wird so weit vorgeschoben, bis seine hintere Stirnfläche mindestens in einem Abstand -ls von der auf der Eingangsseite befindlichen Referenzstelle L liegt. Darauf wird von dem vorderen Ende des Restteils R ein Abschnitt a abgetrennt und es verbleibt ein Reststück r der Länge L - ls oder etwas kürzer. Der abgetrennte Abschnitt a wird als Abfall entfernt (f).

Beim nächsten Vorschub wird durch die nächste Stange Sn das Reststück r bis zum Anschlag A vorgeschoben und es wird aus dieser nächsten Stange ein Komplementärtstück c der Länge ls oder etwas länger abgetrennt, welches Komplementärstück c also in seiner Länge mit Sicherheit nicht kritisch ist. Somit wird der zusammengesetzte Bolzen ZB gebildet (g), der dann weiterbefördert werden kann.

Dabei ist es vorteilhaft, den Restteil R nur soweit vorzuschieben, dass seine hintere Stirnfläche im oder beim Abstand -ls von der Referenzstelle L liegt, wodurch der als Abfall wegfallende Abschnitt a möglichst klein gehalten werden kann. Dadurch werden brauchbare Reststücke erzeugt, deren Länge L - ls beträgt, eher als kürzere Stücke, deren Länge zwischen ls und L - ls liegt.

2) Darstellungen h bis j:

Wie unter h gezeigt, kann die Länge des Restteils R aber grösser als L sein und zwischen L und L + ls liegen. Es ist dann möglich, ein solcher Restteil, wie ein soeben beschriebener Restteil zu verarbeiten, dessen Länge zwischen L - ls und L liegt, d.h. wie in den Darstellungen e - g gezeigt. Es entsteht aber dann wie unter i gezeigt, ein relativ langer Abschnitt a, der als Abfall wegfällt. Beim nächsten Vorschub wird, wie unter j gezeigt, das entstandene Reststück r mit einem aus der nächsten Stange abgetrennten Komplementärstück c zu einem zusammengesetzten Bolzen ZB kombiniert.

3) Darstellungen k und m:

Im Interesse einer Abfallreduzierung wird im Falle eines Restteils mit einer Länge zwischen L und L + ls (k),- also länger als L -, ein solcher Restteil vorzugsweise, wie unter m gezeigt, nur so weit vorgeschoben, dass seine hintere Stirnfläche im Abstand L von der Trennstelle T zu liegen kommt. Es wird dann aus dem vorderen Ende dieses Restteils ein Abschnitt a abgetrennt, der kürzer als ls. ist, und es verbleibt ein Rest r = B der Länge L, der als einteiliger Bolzen weiterbefördert werden kann.

4) Darstellung m:

Falls der Restteil R gerade die Länge L aufweist, wird er vorzugsweise als einteiliger Bolzen weiterbefördert. Ein solcher Restteil R kann aber auch wie ein Restteil mit Länge zwischen L - ls und L verarbeitet werden, wobei das Entstehen eines Abfallabschnittes der Länge ls in Kauf genommen wird.

In der Praxis ist ein Restteil als einteiliger Bolzen auch dann brauchbar, wenn seine Istlänge nicht ganz genau mit der Sollänge L identisch ist, jedoch in einem Toleranzbereich L ± t liegt, wobei je nach Anforderungen für den Wert von t ein paar Millimeter, z.B. bis etwa 5 mm, besser bis etwa 2 mm akzeptabel sind.

In einer Anlage zur Durchführung dieses Verfahrens ist vor der Trennstelle eine Messvorrichtung erforderlich, mit welcher die Länge des Stangenrestteils R im Bereich L - ls bis L + ls ermittelt werden kann, bzw. festgestellt werden kann, ob und wann die hintere Stirnfläche eines Stangenrestteils in einem solchen Abstand von der Trennstelle T liegt, und ferner, nach der Trennstelle, eine Einrichtung zum Abführen der abgetrennten kurzen Abschnitte zweckmässig.

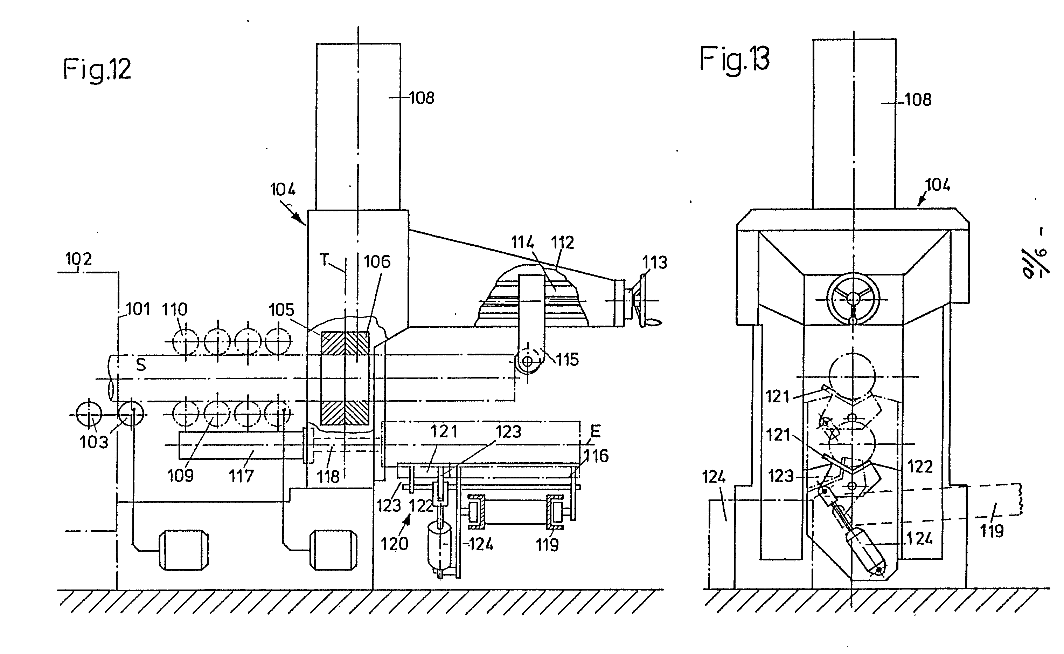

Nachfolgend wird eine solche Anlage anhand eines in den Figuren 12-14 abgebildeten Ausführungsbeispiels in Form einer anschliessend an einen Aufheizofen angeordneten Warmschere näher erläutert.

Im Abstand von der Austrittseite 101 eines Durchlaufofens 102 mit durch eine Kette oder durch Treibrollen gebildeter Transportvorrichtung 103 ist eine Warmschere 104 angeordnet - z.B. der Art, wie in der deutschen Offenlegungsschrift 26 04 418 beschrieben. Diese besitzt einen feststehenden Scherring 105 und einen beweglichen Scherring 106, der in einem vertikal bewegbaren Scherringhalter 107 befestigt ist, welcher durch die Hydraulik 108 betätigt wird. Beide Scherringe 105 und 106 bestimmen in der Warmschere die eigentliche Trennebene oder Trennstelle T, die in der Fig. 12 durch eine strichpunktierte Linie symbolisiert ist. Bei der dargestellten Warmschere erfolgt der Schervorgang nach dem Oberschnittprinzip, d.h. durch Verschieben des beweglichen Scherringes 6 nach unten. Die Bewegungsrichtung beim Schervorgang ist jedoch im Zusammenhang mit der vorliegenden Erfindung unwesentlich.

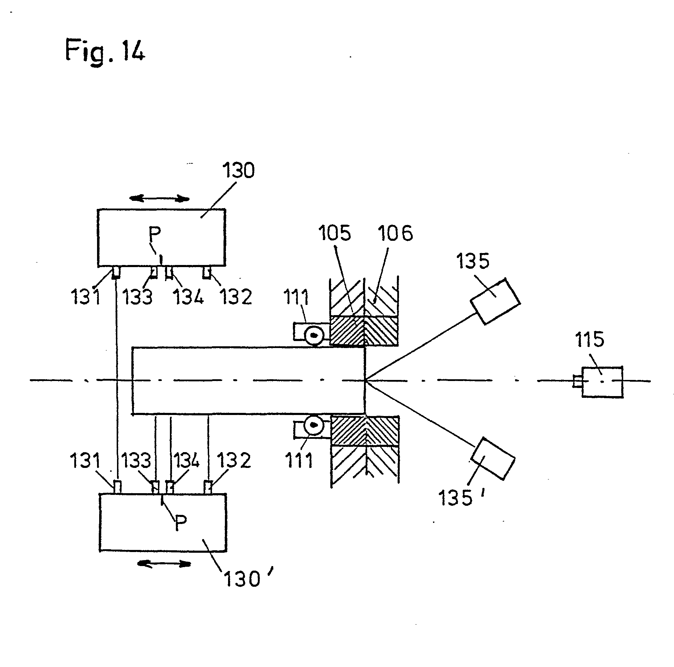

Auf der Eingangsseite der Warmschere ist zur Beförderung der Stangen bzw. Stangenreste zu der Schere ein unterer Treibrollensatz 109 vorgesehen. Zweckmässigerweise ist zur genaueren Einführung des vorderen Strangenendes in den feststehenden Scherring ein weiterer von oben auf den Strang pressenden Rollensatz 110 sowie ein Paar am Gerüst der Warmschere 104 angebrachter seitlicher Führungsrollen 111 (Fig. 14) vorhanden.

Im dargestellten Ausführungsbeispiel ist die Warmschere 104 auf ihrer Austrittsseite mit einem massiven feststehenden Ausleger 112 versehen, welcher den mit einem Antriebmittel, z.B. dem Handrad 113 über einen Spindel 114 einstellbaren Anschlag 115 trägt. Dieser Anschlag 115 kann federnd gelagert sein, und auf einen Schalter wirken, wenn er durch das vordere Ende einer Stange zurückgestossen wird, wobei dieser Schalter dann den Schervorgang freigibt oder selber auslöst.

Der einstellbare Anschlag 115 kann aber auch in anderer Art angebracht werden. Auch besteht die Möglichkeit, die Einstellung des Anschlags 115 mittels eines Elektromotors vom Steuerpult aus vorzunehmen.

Ebenfalls vorgesehen auf der Austrittsseite der Warmschere 104 ist ein Aufnehmer 116 für die abgetrennten Stücke, der flüchtend mit der Bohrung des beweglichen Scherrings 106 liegt und mit letzteren synchron beweglich ist, derart, das er die Auf- und Abbewegung der Schere mitmacht. Dieser Aufnehmer 116 kann fest, gelenkig oder über einen Anschlag mit dem beweglichen Scherringhalter 107 verbunden sein, oder durch eigene Antriebmittel zur Höhenverstellung versehen sein, welche die Synchronisierung mit dem beweglichen Scherring 106 gewährleisten.

Für das Abscheren wird zunächst die Stange S aus dem Ofen herausgeholt und durch die Schere auf den Aufnehmer 116 bis zum Anschlag 115 befördert, worauf der eigentliche Abschervorgang erfolgen kann. Dazu wird der Scherringträger 107 in der abgebildeten Ausführungsform nach unten verschoben, und zwar bis zu einer unteren Endstellung E, die koaxial zu einem Ausstosszylinder 117 liegt. Dann kann mit dem Stössel 118 dieses Anstosszylinders 117 das abgetrennte Stück aus dem beweglichen Teil der Schere soweit ausgestossen werden, dass es ganz auf den Aufnehmer 116 zu liegen kommt und für die Weiterbeförderung bereit ist.

Bei bekannten Warmscheren wird der Aufnehmer beispielsweise durch zwei parallele Schienen, durch eine Aufnahmeschale, die im Querschnitt gewölbt oder V-förmig sein kann, oder noch durch eine Rollenbahn gebildet. Von diesem Aufnehmer wird der abgetrennte Bolzen entweder durch eine axiale oder durch eine seitliche Bewegung entfernt, je nach dem wie das angeschlossene Fördermittel zur Strangpresse verläuft. - Eine solche axiale Bewegung lässt sich ohne weiteres mit der erwähnten Rollenbahn durchführen. Bei einem aus zwei Schienen bestehenden Aufnehmer lässt sich das seitliche Auswerfen des Bolzens z.B. mit einem exzentrisch zwischen den Schienen hochgehobenen Auswerfer oder durch einen etwa horizontal oberhalb der Schienen verschiebbaren Ausstosser durchführen. Auch ist es möglich, die eine Schiene hochbewegbar zu montieren, derart, dass sie den Bolzen über die andere Schiene hinauswirft.

Als Aufnahmeschale gestaltete Aufnehmer werden vielmals als Uebergabevorrichtung ausgebildet, indem sie auf eine Transportvorrichtung 19 montiert und dadurch zwischen der Warmschere und der Ladestation der Strangpresse bzw. zwischen der Warmschere und einer Zwischenstation hin- und herfahrbar sind.

In einer zur Durchführung des erfindungsgemässen Verfahrens geeigneten Anlage ist nunmehr nach der Trennstation, insbesondere der Warmschere 4, eine Abwerfvorrichtung 20 vorgesehen, mit welcher die kurzen Abschnitte mit einer Länge kleiner als die Sicherheitslänge $L_s$ ausserhalb der normalen Materialspur abgeworfen werden können.

Eine beispielhafte Ausführungsform einer solchen Abwerfvorrichtung ist in den Figuren 12 und 13 veranschaulicht.

An seinem der Warmschere 104 benachbarten Ende ist der als Uebergabevorrichtung ausgebildete und zwischen Warmschere und einer nächsten Station hin- und herfahrbare Aufnehmer 116 mit einer mit ihm flüchtenden als Abwerfvorrichtung 120 dienenden Aufnahmeschale 121 vorgesehen, die auf einer um eine Drehachse 122 gelagerte Kippvorrichtung 123 montiert ist und z.B. mit einem Hydrauliksystem 124 betätigt werden kann, wobei die Kippvorrichtung 123 samt Drehachse 122 sowie das Hydrauliksystem 124 am übrigen Teil des Aufnehmers 116 angebaut sind. Damit wird die Aufnahmeschale 121 Bestandteil des hin- und herfahrbaren Aufnehmers 116. Die Länge der kippbaren Aufnehmerschale 121 soll zweckmässigerweise mindestens etwas grösser sein als die grösste Sicherheitslänge ls, die in der betreffenden Anlage in Betracht kommen kann. Um bei Gelegenheit einen unbrauchbaren kurzen Abschnitt a abzuwerfen wird die Aufnahmeschale 121, wie in der Fig. 13 gestrichelt gezeigt, in einer Richtung gekippt, welche der normalen Abführrichtung der Bolzen B entgegengesetzt ist, derart, dass der kurze Abschnitt a in einen Abfallbehälter 125 hinunter fällt.

Statt ein ganzer Abschnitt des Aufnehmers als kippbare Aufnahmeschale zu gestalten ist es auch möglich, einen Abschnitt aus nur einer Wand, bzw. einer Seite des Aufnehmers kippbar auszubilden.

Wenn der eigentliche Aufnehmer gleichzeitig als Uebergabevorrichtung ausgebildet ist besteht ferner noch die Möglichkeit, die kippbare Aufnahmeschale zwischen der Warmschere und dem eigentlichen Aufnehmer ortsfest einzuschalten und der Ausstosszylinder so lange zu bauen, dass er in der Lage ist, entweder kurze Abschnitte bis auf diese Aufnahmeschale oder aber einteilige oder mehrteilige Bolzen bis auf den als Uebergabevorrichtung gestalteten Aufnehmer vorwärts zu stossen. Dann verbleibt die kippbare Aufnahmeschale bei der Schere, macht die Bewegung des beweglichen Scherrings mit, das Hin- und herfahren des als Uebergabevorrichtung gestalteten Aufnehmers jedoch nicht.

In Abwandlung davon können z.B. bei einer bereits vorhandenen Anlage die kurzen Abschnitte auch auf einen an sich bekannten, für die Bolzen als Uebergabevorrichtung ausgebildeten Aufnehmer übernommen werden, wobei dann auf der Transportstrecke zur Strangpresse eine Zwischenstation mit Auswerfer vorgesehen wird, mit welchem die kurzen Abschnitte von der Uebergabevorrichtung in einen Abfallbehälter weggestossen werden.

Im Rahmen der Erfindung sind für die Auswerfvorrichtung noch weitere Ausführungsformen möglich. Zum Beispiel wenn der Aufnehmer ortsfest an der Warmschere angeordnet ist und nicht als Uebergabevorrichtung verwendet wird, die Bolzen aber entweder axial oder seitlich entfernt werden, so ist es möglich, eine zusätzliche, als Auswerfer dienende Vorrichtung vorzusehen, welche die kurzen Abschnitte ausserhalb der normalen Materialspur wegbringen. Insbesondere ist es dann möglich, ein durch Tragschienen oder eine Schale gebildeter Aufnehmer beidseitig kippbar auszubilden und z.B. mittels einer Hydraulik oder einem Elektromotor derart anzutreiben und zu kippen, dass einerseits brauchbare ein- oder mehrteilige Bolzen durch Ueberrollen auf eine Fördervorrichtung zur Strangpresse übergeben werden, bzw. unbrauchbare Abschnitte in die andere Kipprichtung zu einem Abfallbehälter abgeworfen werden. Ein exzentrisch zwischen den Schienen eines Aufnehmers hochbewegten Ausstossers kann momentan auf die andere Seite der Aufnehmerlängsachse versetzt werden und dadurch ein Ueberrollen des Abschnitts a in die entgegengesetzte Richtung bewirken.

Wie weiter oben bereits erwähnt, ist bei einer zur Durchführung der erfindungsgemässen Verfahren geeigneten Anlage vor der Trennstelle eine Messvorrichtung 130 vorzusehen, mit welcher festgestellt, bzw. ermittelt werden kann, ob und wann nach Abtrennen einer gewissen Anzahl einteiliger Bolzen Strangrestteile vor der Trennstelle eine Länge zwischen L + ls und L - ls aufweisen, bzw. die hintere Stirnfläche eines Strangrestes, dessen vordere Stirnfläche in der Trennebene liegt, sich in einem solchen Abstand von der Trennstelle befindet, was bedeutet, dass eine erfindungsgemässe Verarbeitung dieses Strangrestteils zu erfolgen hat und die entsprechenden Schritte für den nächsten Abtrennvorgang einzuleiten sind.

Eine solche Messeinrichtung 130 kann unmittelbar die hintere Stirnfläche des Strangrestes abtasten, wenn diese im Wirkungsbereich der Messvorrichtung liegt, oder sie kann auch mit einem zum Vorschub des aufzuteilenden Stranges gegebenenfalls verwendeten Stosser oder sonstigen Treibmitteln zusammenwirken.

Diese Messvorrichtung kann mit mechanischen, elektromechanischen, kapazitiven, induktiven, optischen und/oder optoelektrischen oder äquivalenten Mitteln arbeiten.

Diese Messvorrichtung 130 besitzt einen Nullpunkt P und ist inbezug auf die Trennstelle T längsverschiebbar, derart dass ihr Nullpunkt P in einem Abstand L von der Trennstelle T entsprechend der jeweils gewünschten Bolzensollänge L eingestellt werden kann. Sie kann aber auch ortsfest angeordnet sein und mit einem Gegenstück zusammenwirken, welches den jeweils gewünschten Abstand L berücksichtigt.

Mindestens ist diese Messvorrichtung mit zwei gegen den Nullpunkt P aus- und zueinander verschiebbare Aussenbegrenzern 131 und 132 versehen, mit denen der Bereich L + ls bis L - ls entsprechend den gewählten ls-Werten nachgebildet wird.

In ihrer vollständigen Ausführungsform weist die Messvorrichtung 130 mindestens einen oder vorzugsweise zwei ebenfalls einstellbare Innenbegrenzer 133 und 134 in einem Toleranzabstand t vom Nullpunkt P auf.

Ein Ausführungsbeispiel einer derartigen Messeinrichtung ist in der Figur 14 schematisch dargestellt.

In der abgebildeten Anlage ist zwischen Durchlaufofen 102 und Warmschere 104 ein genügender Abstand vorhanden, sodass die Messeinrichtung 130 sich nahe vor der Trennstelle, etwa auf der Höhe der Strangachse, einbauen lässt und auch die Lage der hinteren Stirnfläche eines Restteiles der Länge L + ls bis L - ls unmittelbar feststellen kann.

Die abgebildete Messvorrichtung arbeitet in bevorzugter Art mit Lichtschranken, und ist dazu mit die verschiedenen Aussen- und Innenbegrenzern 131, 132, 133, 134 bildenden Photozellen sowie, auf der anderen Seite der Strang S, mit entsprechend angeordneten Lichtquellen 131',132',133' und 134' ausgerüstet.

Die in Materialflussrichtung gesehen Eingangszelle 131 wird im Abstand +ls vom Nullpunkt P der Messvorrichtung, die Ausgangzelle 132 im Abstand -ls davon eingestellt. In der weiteren vorteilhaften Ausführungsform der Messvorrichtung 130 sind noch die beiden mittleren Zellen 133 und 134 vorhanden, die in einem Toleranzabstand +t bzw. -t zum Nullpunkt P eingestellt sind. Damit die relativ eng aneinander angeordneten mittleren Lichtschranken 133 - 133' und 134 - 134' sich gegenseitig nicht stören, sind sie vorteilhafterweise gegenüber der Strangachse höhenversetzt oder aber im Kreuz montiert, derart, dass die ensprechenden Lichtstrahlen in einem Winkel von etwa 15 - 30° zueinander verlaufen.

Die als Ganzes längsverschiebbare Messvorrichtung 130 - 130' wird mit ihrem Nullpunkt P auf die gewünschte Bolzensollänge L eingestellt.

Im weiteren arbeitet diese Messvorrichtung zusammen mit einem Abtaster 135, mit welchem festgestellt wird, zu welchem Zeitpunkt eine vordere Stirnfläche des zur Schere zugeführten Materials (Strang oder Strangrestteil) in die Trennebene T liegt. Zu diesem Zeitpunkt werden die Ermittlungen der Messvorrichtung gewonnen und für das weitere Vorgehen ausgewertet, wie dies weiter unten näher beschrieben werden soll. Als Abtaster kann eine Photozelle 135 eingesetzt werden, welche den auf die vordere Stirnfläche des Strangs oder des Strangrestteils reflektierten Lichtstrahl einer Lichtquelle 135' empfängt. Auch ist es möglich als Abtaster einen bis in die Trennebene T reichenden schwenkbaren Hilfsanschlag einzubauen, der, wenn zurückgestossen, einen Schalter betätigt und beim Weiterverschieben des Materials ausschwenkt.

Die Funktionsweise dieser Messeinrichtung soll weiter unten näher beschrieben werden.

Da die beschriebene Messvorrichtung mittels Lichtschranken arbeitet muss, damit sie richtig funktionieren, d.h. Meldungen abgeben kann, die hintere Stirnfläche des Strangrestteils frei und zugänglich sein.

Nun werden in einer üblichen Abtrennanlage die Stränge so nacheinander zugeführt, dass deren einander zugewandte Stirnflächen, d.h. die hintere Stirnfläche eines Stranges und die vordere Stirnfläche des nächsten Stranges, aneinanderstossen. Man spricht dabei von einer Barrenkontaktstelle oder von einer Stossstelle. Solange die beiden Stränge aneinander stossen, ist für ein Lichtstrahl kein Platz vorhanden, und die Photozellen verhalten sich bei einer Stossstelle so, wie wenn ein voller Strang vor ihnen steht, d.h. sie reagieren nicht. Auch laufen in einer üblichen Abtrennanlage das Zufuhrtransportmittel 103, insbesondere des Durchlaufofens 102, sowie der Treibrollensatz 109 (-110) der Warmschere 104 synchron.

Aufgabe einer Weiterentwicklung der Erfindung ist es, Abhilfe dazu zu schaffen, und die Stosstellen im Bereich der Messvorrichtung aufzulösen.

Zur Lösung dieser weiteren Aufgabe wird einem durch die Trennvorrichtung bis zum Anschlag 115 vorgeschobenen Strangrestteil, dessen vor der Trennstelle befindlicher Anteil eine Länge von weniger als etwa die zweifache Bolzensolllänge aufweist, eine solche Vorschubgeschwindigkeit erteilt, die grösser als die normale Vorschubgeschwindigkeit ist, und dadurch einen Abstand oder Luftspalt zwischen diesem Strangrestteil R und der nächsten Strang Sn gebildet.

Wenn sich diese differenzierte Vorschubgeschwindigkeit eingestellt hat, kann man nach einer vorteilhaften Verbesserung des Vorschubvorgangs ferner dafür sorgen, dass nur noch der Strangrestteil R bis zum Anschlag 115 weitervorgeschoben wird und der Vorschub des nächsten Stranges Sn gestoppt wird.

Zu diesem Zweck wird der auf der Eintrittseite der Trennstation, insbesondere der Warmschere befindliche Treibrollensatz mit solchen Antriebsmitteln angetrieben, die sowohl Synchronlauf mit dem Fördermittel auf der Zufuhrstrecke, insbesondere im Durchlaufofen gestatten, wenn eine Stange sich über beide erstreckt, wie auch Eillauf des besagten Treibrollensatzes, wenn ein Strangrestteil hauptsächlich oder ganz nur unter der Wirkung dieses Treibrollensatzes steht.

Hierzu wird der Treibrollensatz der Warmschere mittels Antriebsmittel mit Rutschwirkung angetrieben. Es kann ein Asychron-Motor verwendet oder zwischen Motor und Treibrollensatz eine Rutschkupplung zwischengeschaltet werden, die in bekannter Art z.B. mechanisch, magnetisch oder induktiv sein kann, und deren Eingangsteil schneller dreht als der am Treibrollensatz angeschlossene Teil.

Wenn eine Rutschkupplung zwischengeschaltet ist besteht die Möglichkeit als Antriebmittel der gleiche Elektromotor für die Zufuhrförderer und den Treibrollensatz zu verwenden, wobei eine andere Uebersetzung die unterschiedliche Geschwindigkeit der beiden Fördermittel gestattet. Vorzugsweise wird jedoch für jeden Förderer ein spezieller Elektromotor vorgesehen.

Eine bevorzugte Ausrüstung ist in der Fig. 12 dargestellt, wo die Transportvorrichtung 103 des Durchlaufofens 102 durch den Motor 136 und der Treibrollensatz 109 (-110) der Warmschere 104 durch den Asynchron-Motor 37 angetrieben wird.

Sobald ein durch den Treibrollensatz 109 (-110) gefasster Strangrestteil auf der Transportvorrichtung 3 nicht mehr stark aufliegt, nimmt die Belastung des Asynchron-Motors 137 ab, dessen Drehzahl zu, mit dem Effekt, dass der Strangrestteil durch den Treibrollensatz 109 schneller vorgeschoben wird.

Auf diesem Weg und mit solchen Mitteln wird es möglich, zwischen der hinteren Stirnfläche eines Strangrestteils und des nächsten Stranges ein mehr oder weniger breiter, jedoch für die Lichtschranke ausreichender Luftspalt im Bereich der Messeinrichtung zu bilden, deren Funktionsweise nunmehr wie folgt näher erläutert werden kann:

Es wird zunächst angenommen, dass die mit seinem Nullpunkt P in gewünschtem Abstand L von der Trennstelle T eingestellte Messvorrichtung 130, in einer einfachen Ausführungsform nur mit den beiden Aussenzellen 131 und 132 versehen ist, die im gewählten Abstand +ls und -ls vom Nullpunkt P eingestellt sind.

Solange ein relativ langer Strang bzw. ein Strangrest, der länger als L + ls ist, vor der Messeinrichtung liegt, wird der Lichtstrahl unterbrochen. Das Material wird verarbeitet, wie an Hand von Fig. 11, Darstellungen a, bzw. b bis d gezeigt. Das einmal entstehende Reststück r mit der Länge kleiner als L - ls wird, wie sonst auch der Strang, zum Warmhalten in den Ofen zurückgeführt. Beim nächsten Vorschub wird dieses Reststück r durch den Treibrollensatz unter Auslösen der Stosstelle und Bildung eines Luftspaltes schneller angetrieben, passiert vor der Eingangszelle 131 und nachher vor der Ausgangszelle 132, sodass wenn seine vordere Stirnfläche die Trennebene T erreicht - was durch den Abtaster 135 festgestellt wird - , beide Zellen 131 und 132 auf den Lichtstrahl reagiert haben. Aufgrund der Meldung der Ausgangszelle 32 wird der Verschub des nächsten Stranges fortgesetzt, welche das Reststück bis zum Anschlag 115 vorschiebt, worauf ein Abschervorgang erfolgt und ein mehrteiliger Bolzen gebildet wird.

Von Zeit zu Zeit entstehen aber sogenannte kritische Strangrestteile, deren Länge zwischen L + ls und L - ls liegt.

Wenn ein solcher Restteil R, welcher zwischenzeitlich in den Ofen zurückgeführt worden ist, beim nächsten Abruf mit des nächsten Stranges Sn vorgeschoben wird, wird er durch den Rollentreibsatz 109 (-110) gefasst und beschleunigt, wodurch der erwünschte Luftspalt entsteht. Bei diesem Vorschub passiert die hintere Stirnfläche des Restteils vor der Eingangszelle 31 bevor die vordere Stirnfläche die Trennebene T erreicht hat. Im Zeitpunkt, wo der Abtaster 35 feststellt, dass die vordere Stirnfläche die Trennebene erreicht hat, hat nur die Eingangszelle 131 reagiert. Aufgrund der Meldung der Eingangszelle 131 wird der Restteils vorzugsweise langsamer weitergeschoben, bis seine hintere Stirnfläche vor der Ausgangszelle 132 passiert und diese reagiert und den Vorschub dieses Restteils stoppt. Am vorderen Ende des Restteils wird dann ein Abschnitt a abgetrennt, wie in den Darstellungen e, f bzw. h, i von Fig. 11 gezeigt, wobei vor der Trennstelle ein Rest der Länge L - ls verbleibt. Dieser Abschnitt wird durch den Ausstosszylinder 117 ausgestossen und mit dem Auswerfer 120 ausgestossen und mit dem Auswerfer 120 ausgeworfen. Der bewegliche Scherring 106 wird wieder in die geöffnete Scherlage zurückgebracht. Durch den nunmher abgerufenen nächsten Strang wird der Rest bis zum Anschlag 115 vorgeschoben, worauf ein Komplementärstück c abgetrennt und ein zusammengesetzter Bolzen gebildet wird, wie in der Darstellung g und j gezeigt.

Vorzugsweise ist aber die Messeinrichtung in einem Abstand t von ihrem Nullpunkt P noch mit zwei mittleren Zellen 133 und 134 versehen. Dadurch wird ein verbessertes Richtscheren der Strangrestteile ermöglicht, wie in den Darstellungen k und m, bzw. e bis g von Fig. 11 gezeigt. Bei Situationen wie nach den Darstellungen a bzw. b bis d von Fig. 11 verhält sich diese verbesserte Messeinrichtung, wie die nur mit zwei Aussenbegrenzer 131 - 132 ausgerüstete vorher beschriebene Messeinrichtung.

Ist ein Restteil vorhanden, dessen Länge zwischen L + ls und L liegt, - wie in den Darstellungen k und m gezeigt - und durch den Treibrollensatz 109 (-110) beschleunigt worden, so hat nur die Eingangszelle 131 reagiert, wenn seine vordere Stirnfläche die Trennebene T erreicht hat, was durch den Abtaster 135 festgestellt wird. Dieser Restteil wird dann vorzugsweise langsamer weitergeschoben, bis seine hintere Fläche vor der ersten mittleren Zelle 133 passiert hat, worauf aufgrund der Meldung dieser Zelle 133 der Vorschub gestoppt wird und die hintere Stirnfläche im Toleranzbereich zwischen den beiden mittleren Zellen 133 - 134 zum Stillstand kommt. - Es versteht sich daraus, dass bei dieser Arbeitsweise die Breite des Toleranzbereichs mindestens auf seiner Eingangsseite auch unter Berücksichtigung der Inertie des Restteils zu wählen und einzustellen ist. , d.h. es kann nötig sein, die erste mittlere Zelle 133 in einen etwas grösseren Abstand vom Nullpunkt P einzustellen. - Dann wird am vorderen Ende des Restteils ein Abschnitt a abgetrennt, in beschriebener Art weggestossen und abgeworfen. Hinter der Trennebene verbleibt ein Reststück r der Sollänge L, das bei geöffneter Schere durch den nächsten Strang oder mittels eines Hilfsstossers bis zum Anschlag 115 geschoben werden kann. Nach Zurückverschieben des anschliessenden Stranges bzw. des Hilfsstossers, kann durch einen leeren Schervorgang dieses Reststückes vor den Ausstosszylinder 117 gebracht und dann durch diesen ausgestossen werden.

Damit dieser Rest der Nennlänge L bei einem nächsten zum Ausstossen erforderlichen leeren Schervorgang an seinem hinteren Ende nicht abgeschert wird, wird beim Richtscheren dafür gesort, dass er eine Istlänge erhält, die ein wenig kleiner als die Sollänge L ist, oder der Anschlag 115 wird vor dem Verschieben dieses Rests bis zu diesem Anschlag und dem angeschlossenen leeren Schervorgang vorübergehend auf einen etwas grösseren Abstand von der Trennstelle eingestellt.

Ist dagegen ein Stangenrestteil vorhanden, dessen Länge zwischen L und L - ls liegt, und durch den Treibrollensatz beschleunigt worden ist, so reagiert zunächst die Eingangszelle 131, welche den Restteil vorzugsweise langsamer weiter verschieben lässt, und dann die beiden mittleren Zellen 133 - 134, worauf der Abtaster 135 feststellt, dass die vordere Stirnfläche nunmehr die Trennebene erreicht hat. Aufgrund der kombinierten Meldungen des Abtasters 135 und der zweiten mittleren Zelle 134 wird der Restteil weiterverschoben, bis seine hintere Stirnfläche die Ausgangszelle 132 passiert hat und diese reagiert und den Vorschub stoppt. Darauf wird von dem vorderen Ende des Restteils ein Abschnitt a abgetrennt und in beschriebener Art ausgestossen und abgeworfen. Hinter der Trennebene T verbleibt ein Reststück r der Länge L - ls, das anschliessend durch den nächsten Strang bis zum Anschlag 115 vorgeschoben wird und durch Abtrennen eines Komplementärstücks c aus diesem nächsten Strang zu einem zweiteiligen Bolzen kombiniert wird.

Liegt einmal ein Strangrestteil mit einer Länge im Toleranzbereich L ± t vor, so befindet sich dessen hintere Stirnfläche zwischen den Zellen 133 und 134 im Zeitpunkt, wo der Abtaster 135 feststellt, dass seine vordere Stirnfläche die Trennstelle erreicht hat. Ein solcher Restteil wird dann aufgrund der Meldungen in gleicher Art weiterbefördert, wie für einen Rest der Länge L beschrieben, der durch Richtscheren eines Strangrestteils mit einer Länge zwischen L und L + Ls entsteht.

Falls aus Platzgründen oder sonstigen Gründen nur eine einzige Zelle in der Nähe des Nullpunkts P der Messvorrichtung angebracht werden kann, so wird auf die zweite mittlere Zelle 134 verzichtet, deren Funktion durch die erste mittlere Zelle 133 mitübernommen wird. In einem solchen Fall wird ein Restteil der Länge L wie ein Restteil mit einer Länge zwischen L und L - Ls bearbeitet, d.h. er wird soweit vorgeschoben, bis seine hintere Fläche die Ausgangszelle 132 passiert hat, worauf am vorderen Ende dieses Restteils ein Abschnitt etwa der Länge Ls abgetrennt wird.

Es empfiehlt sich ein Richtscheren im letzten Moment, d.h. gerade vor einem Bolzenabruf vorzunehmen, was überflüssig macht, den z.T. im feststehenden Scherring stehenden Rest r der Sollänge L oder der Länge L - Ls zum Warmhalten in den Ofen zurückzuführen.

Zweckmässigerweise wird die Messeinrichtung während des Rücktransports eines vor der Trennstelle befindlichen Strangteils in den Ofen ausgeschaltet, damit die Zellen keine Meldungen abgeben, wenn die vordere Stirnseite dieses Strangteils an ihr vorbei geht und für einen Lichtstrahl den Weg freigibt.

Die beschriebene Messvorrichtung 130 lässt sich aber ohne Abtaster 135 verwenden, indem sie ihre Funktionen erfüllt, nachdem ein Strang oder ein Strangrestteil bis zum Anschlag 115 vorgeschoben worden ist und stillsteht. Aufgrund der Ermittlungen der Messvorrichtung 130 erfolgt dann die Verarbeitung des vor der Trennstelle befindlichen Strangteils wie vorher beschrieben. Falls eine Abänderung der Bolzensollänge vorgenommen werden soll, wird dann jedenfalls der vor der Trennstelle befindliche Strangteil zurückgeschoben und zur Messvorrichtung neu geführt, damit diese ihre Messungen aufgrund der neuen Daten durchführt.

Die hier anhand von Fig. 14 beschriebene Messvorrichtung mit Lichtschranken sowie das beschriebene Auflösen einer Kontaktstelle zwischen einem Strangrestteil und einer anschliessenden Strang vor der Trennstation durch Beschleunigen dieses Restteils, lassen sich auch in vorteilhafter Weise für die Durchführung der ersten Ausführungsform des erfindungsgemässen Verfahrens und in der entsprechenden Anlage verwenden, weil es sich dort ebenfalls darum handelt, das Auftreten von "kritischen" Restteilen festzustellen und diese nach einem besonderen Verfahren zu verarbeiten.

Die zweite Ausführungsform des Verfahrens sowie die entsprechende speziellen Einrichtungen sind hier am Beispiel des Abtrennens durch Warmscheren beschrieben worden, weil seine Vorteile dann ganz besonders zum Tragen kommen. Sie lassen sich jedoch ebenfalls auch dann anwenden, wenn das Abtrennen durch Sägen erfolgt.

Ferner lässt sich für die Durchführung der zweiten Ausführungsform des Verfahrens als Messvorrichtung nicht nur die soeben im Detail beschriebene Ausführungsform mit Lichtschranken verwenden, sondern es kommen auch andere Ausführungsformen, z.B. wie anhand der Fig. 9 beschrieben, in Betracht.

Anhand der Figuren 12 - 13 ist die Warmschere mehr ins Detail beschrieben worden als dies in Zusammenhang mit Figur 8 der Fall war. Es versteht sich, dass beschriebene Konstruktionseinzelheiten der Warmschere nach Fig. 12 - 13 auch für die Warmschere nach Fig. 8 gelten können.

Im weiteren ist es möglich, die nach der Trennstelle angeordneten Aufnahmevorrichtungen nach Figuren 4 bis 8 bzw. Figuren 12 - 13 miteinander zu kombinieren, d.h. z.B. mindestens eine der Schalen 56/58 eines hin- und herverschiebbaren Wagens 54 nach Fig. 4 bis 8 mit einem kippbaren Auswerfer 120 nach Fig. 12 - 13 auszurüsten, derart dass die Anlage nach Bedarf sowohl nach der ersten wie auch nach der zweiten Ausführungsform des Verfahrens beschrieben werden kann.

Auch bei der beschriebenen zweiten Ausführungsform der Erfindung bleiben insbesondere am Anfang eines Auftrags vorgenommene und anhand von Beispiel 3, Punkt 3 beschriebene Anpassungen der Bolzensollänge L aus irgendwelchen Gründen stammende Längsabweichungen der zu Verfügung stehenden Strangen ohne Einfluss. In jedem Fall ist es möglich, Strangen unterschiedlicher Länge aufzuteilen, ohne dass dabei störende Kurzstücke entstehen. Ebenfalls bleiben in gleicher Art die beim Abtrennen durch Sägen die dem Sägespalt entsprechenden Längenverluste ohne Einfluss auf den Ablauf des Abtrennprozesses.

Dies bringt, und zwar für alle Ausführungsformen des erfindungsgemässen Abtrennverfahrens, den weiteren Vorteil mit sich, dass in der Giesserei die Strangen mit den grössten Längen gegossen werden können, die auf den jeweiligen Stranggiessanlagen möglich sind. Man braucht sich dabei auch nicht darum zu kümmern, ob später im Presswerk die Strangguss-Strangen mit Längenverlusten abgesägt oder ohne Längenverluste warm abgeschert werden.

Patentansprüche

1. Verfahren zum Abtrennen von Pressbolzen vorgeschriebener Länge L aus nacheinander zu einer Trennstation zugeführten Strängen, wobei man beim Uebergang zu einem nächsten Strang ein Komplementärstück zu einem verbleibenden Abschnitt des vorangehenden Strangs vom nächsten Strang abtrennt und aus diesem Abschnitt und dem Komplementärstück einen mehrteiligen Bolzen der vorgeschriebenen Länge bildet,

dadurch gekennzeichnet,

dass man - für den Uebergang - aus einem Restteil des vorangehenden Stranges, in Materialflussrichtung gesehen mindestens vor der Trennstelle durch eine erste Abtrennoperation mindestens einen Abschnitt der Länge ls bis L-ls erzeugt und den nach der Trennstation anfallenden Abschnitt aus der Materialspur entfernt, worauf man vom nächsten Strang durch eine weitere Abtrennoperation mindestens ein Komplementärstück der Länge ls bis L-ls abtrennt und durch Zusammensetzen von solchen Abschnitten der besagten Länge mit solchen Komplementärstücken mehrteilige Bolzen der vorgeschriebenen Länge L für die Weiterverarbeitung bildet, wobei ls eine vorgegebene Sicherheitslänge ist, die grösser als eine kritische Länge lk ist, welche aufgrund der Gegebenheiten der zur Verfügung stehenden Anlage und der Grösse des Strangquerschnittes ermittelt wird.

2. Verfahren nach Anspruch 1, dadurch gekennzeichnet, dass die kritische Länge lk mindestens die Hälfte des Durchmessers bzw. Höhenmasses des liegend zur Abtrennvorrichtung zugeführten Stranges beträgt.

3. Verfahren nach einem der Ansprüche 1 und 2, dadurch gekennzeichnet, dass man bei der ersten Abtrennoperation auch hinter der Trennstation mindestens einen Abschnitt der Länge ls bis L-ls erzeugt und aus der Materialspur in eine abseitige Warteposition vorübergehend verschiebt und in Zusammenhang mit einer nächsten Abtrennoperation wieder in die Materialspur zurückbringt und mit einem weiteren aus dem nächsten Strang abgetrennten Komplementärstück zu einem mehrteiligen Bolzen der vorgeschriebenen Länge L zusammensetzt.

4. Verfahren nach Anspruch 3, dadurch gekennzeichnet, dass man aus einem Strang soweit Bolzen der vorgeschriebenen Länge L abtrennt, bis am Strangende ein Restteil R entsteht, dessen Länge mindestens so gross ist wie zweimal die vorgegebene Länge ls (R $\geqslant$ 2 ls), jedoch nicht länger ist als zwei vorgeschriebene Bolzenlängen minus zwei vorgegebene Längen (R $\leqslant$ 2 L - 2 ls) ist,

$$\text{d.h. } 2 L - 2 \text{ ls} \geqslant R \geqslant 2 \text{ ls,}$$

diesen Restteil in zwei Abschnitte unterteilt, die mindestens so lang wie die vorgegebene Länge ls, jedenfalls länger als die kritische Länge lk sind, den einen Abschnitt in eine abseitige Warteposition verschiebt, den anderen Abschnitt des Restteils mit einem aus dem nachfolgenden Strang abgetrennten Komplementärstück zu einem zweiteiligen Bolzen der vorgeschriebenen Länge zusammensetzt und diesen weiterbefördert, dann den erstgenannten Abschnitt aus seiner Warteposition zurückholt und mit einem weiteren aus dem nachfolgenden Strang abgetrennten Komplementärstück zu einem weiteren zweiteiligen Bolzen der vorgeschriebenen Länge zusammensetzt.

5. Verfahren nach einem der Ansprüche 3 und 4, dadurch gekennzeichnet, dass man bei den Uebergängen von Strang zu Strang in einer kombinierten Arbeitsweise zwei zusammengesetzte Bolzen pro Uebergang nur dann bildet, wenn die Länge des anfallenden Strangrestteils im Bereich L ± ls mit ls < 0,5 L liegt, und man sonst pro Uebergang nur einen einzigen zusammengesetzten Bolzen bildet.

6. Verfahren nach Anspruch 5, dadurch gekennzeichnet, dass, wenn am Strangende ein Restteil entsteht, dessen Länge in einem Toleranzbereich L ± t liegt, man diesen Restteil als einteiligen Bolzen weiterbefördert.

7. Verfahren nach Anspruch 5, dadurch gekennzeichnet, dass man den Wert der vorgegebenen Länge unter der Voraussetzung ls > lk bei mindestens 0,15 L, vorzugsweise bei mindestens 0,2 L und bei höchstens L/3, vorzugsweise bei höchstens 0,28 L wählt.

8. Verfahren nach einem der Ansprüche 3 bis 7, bei dem der Strang in einem Durchlaufofen auf eine für das Strangpressen geeignete Temperatur erwärmt und die Pressbolzen daraus durch Warmscheren abgetrennt werden, dadurch gekennzeichnet, dass der aus dem Restteil abgetrennte und in die Warteposition verschobene Abschnitt nach Entfernen des ersten zusammengesetzten Pressbolzens aus der Warteposition zurückgeholt und mit dem für das Abtrennen aus dem Ofen vorspringenden Strangende zum Warmhalten in den Ofen zurückbefördert wird.

9. Verfahren nach einem der Ansprüche 1 und 2, dadurch gekennzeichnet, dass man für einen Uebergang aus einem Restteil des vorangehenden Stranges, in Materialflussrichtung gesehen, vor der Trennstation, beim ersten Trennvorgang einen Abschnitt der günstigen Länge ls bis L-ls, vorzugsweise der Länge L-ls, erzeugt, den nach der Trennstelle anfallenden Abschnitt aus der Materialspur entfernt und als Abfall abwirft, worauf man bei einem nächsten Trennvorgang den erstgenannten Abschnitt günstiger Länge mit einem aus dem nächsten Strang abgetrennten Komplementärstück zu einem mehrteiligen Bolzen der Länge L zusammensetzt.

10. Verfahren nach einem der Ansprüche 1 und 2, dadurch gekennzeichnet, dass man für einen Uebergang aus einem länger als die vorgeschriebene Länge L anfallenden Restteil des vorangehenden Stranges, in Materialflussrichtung gesehen, vor der Trennstation, beim ersten Trennvorgang einen Abschnitt der Länge L erzeugt, den nach der Trennstelle anfallenden Abschnitt aus der Materialspur entfernt und als Abfall abwirft, worauf man den erstgenannten Abschnitt als einteiligen Bolzen weiterbefördert.

11. Verfahren nach einem der Ansprüche 1 und 10, dadurch gekennzeichnet, dass man beim Vorschub zu der Trennstelle die Vorschubgeschwindigkeit eines vor dieser liegenden Strangrestteils gegenüber der Vorschubgeschwindigkeit des anschliessenden Stranges beschleunigt und dadurch den Kontakt zwischen beiden auflöst und einen Luftspalt zwischen beiden erzeugt.

12. Anlage zum Abtrennen von Pressbolzen aus nacheinander zu einer durch eine Säge, eine Warmschere oder dgl. gebildeten Abtrennstation zugeführten Strängen, mit einer Fördervorrichtung zur Zufuhr der aufzuteilenden Stränge nacheinander zu der Abtrennstation und einer weiteren Fördervorrichtung für die Abfuhr der abgetrennten Stücke, insbesondere zur Durchführung des Verfahrens nach einem der Ansprüche 1 bis 11, dadurch gekennzeichnet, dass vor der Trennstation im Bereich der Zufuhrfördervorrichtung eine Messeinrichtung (72,130) zur Ermittlung der Länge des vor der Trennstelle T befindlichen Strangrestteils angeordnet ist und nach der Trennstation im Bereich des Abführförderers (28,30,32, 116) Mitteln (50,120) zum Entfernen von abgetrennten Stücken aus der normalen Materialspur vorgesehen sind.

13. Anlage nach Anspruch 12, dadurch gekennzeichnet, dass die Messeinrichtung (72,130) zwei gegen einen Nullpunkt P aus- und zueinander verschiebbare, einstellbare Begrenzer (80,82,131,132) zur Nachbildung eines veränderbaren Bereichs $L \pm v$, bzw. $L \pm ls$ aufweist.

14. Anlage nach Anspruch 13, dadurch gekennzeichnet, dass die Messvorrichtung zwei weitere gegen den Nullpunkt P verschiebbare Begrenzer (84,86,133,134) zur Nachbildung eines veränderbaren Toleranzbereichs $L \pm t$ aufweist.

15. Anlage nach Anspruch 13 oder 14, dadurch gekennzeichnet, dass der Nullpunkt P der Messvorrichtung (72,130) auf die Bolzensollänge L einstellbar ist.

16. Anlage nach Anspruch 12, dadurch gekennzeichnet, dass sie nach der Trennstation mit Mitteln (50) zum vorübergehenden Entfernen und Zurückholen von abgetrennten Stücken vorgesehen ist.

17. Anlage nach Anspruch 16, dadurch gekennzeichnet, dass abseits vom Abführförderer (28,30,32) eine Einrichtung zur vorübergehenden Lagerung von abgetrennten Stücken angebaut ist.

18. Anlage nach Anspruch 16, dadurch gekennzeichnet, dass im Abführförderer ein quer dazu verschiebbarer Wagen (54) eingeschaltet ist, der mit mindestens zwei Aufnahmeeinrichtungen (56,58) für abgetrennte Stücke ausgerüstet ist, welche wahlweise in eine Flucht mit der Trennstation (22,74) gebracht werden können, wobei mindestens eine dieser Aufnahmevorrichtungen (56,58) für die vorübergehende Lagerung dient.

19. Anlage nach Anspruch 18, dadurch gekennzeichnet, dass der quer verschiebbare Wagen (54) mit seinen Laufschienen (52) als Querförderer bis zu einer nächsten Bear-

0065933

beitungsstation, wie ein Ofen (34), die Chargiereinrichtung einer Strangpresse (38) usw., gestaltet ist.

20. Abtrennvorrichtung nach Anspruch 16 und 17, dadurch gekennzeichnet, dass eine Einrichtung (66) zur vorübergehenden Lagerung von abgetrennten Stücken in der Verlängerung der im Anschluss an die Trennstation befindlichen Abführvorrichtung (28), jenseits eines Querförderers (30), angeordnet ist.

21. Anlage nach Anspruch 12, dadurch gekennzeichnet, dass sie auf der Austrittsseite der Trennstation mit einer Vorrichtung (120) zum Abwerfen der abgetrennten Abschnitte versehen ist.

22. Anlage nach Anspruch 18 bzw. 21 mit einer Warmschere als Trennstation, dadurch gekennzeichnet, dass der verschiebbare Wagen (54) bzw. der Aufnehmer (116) mit Abwerfvorrichtung (120) flüchtend mit dem beweglichen Scherring der Warmschere angeordnet ist und deren Bewegungen mitmacht.

23. Anlage nach Anspruch 22, dadurch gekennzeichnet, dass der verschiebbare Wagen (54) bzw. die Abwerfvorrichtung (120) als beweglicher Bestandteil eines im Anschluss an der Trennstation vorhandenen und als Uebergabevorrichtung zwischen dieser und einer Strangpresse bzw. einer Zwischenstation hin- und herfahrbaren Aufnehmers (116) ausgebildet ist.

24. Anlage nach Anspruch 21, dadurch gekennzeichnet, dass die Abwerfvorrichtung (120) gegenüber dem restlichen Teil des Aufnehmers (116) kippbar ist, wobei die Kippachse sowie die Antriebmittel (124) zum Kippen am restlichen Teil des Aufnehmers (116) montiert sind.

25. Anlage nach Anspruch 12, dadurch gekennzeichnet, dass vor der Trennstation, insbesondere der Warmschere (104), ein gesonderter Treibrollsatz (109/110) vorgesehen ist, der mittels einem Asynchron-Motor (137) oder über eine Rutschkupplung angetrieben ist, deren Eingangsteil mit einer höheren Drehzahl als der mit dem Treibrollensatz (109/110) angeschlossenen Teil dreht.

26. Anlage nach einem der Ansprüche 12 bis 25, dadurch gekennzeichnet, dass die Messeinrichtung (72,130) mit der Einrichtung (50,120) zur abseitigen Verschiebung von abgetrennten Stücken und mit einem für das Ablängen des abzutrennenden Stangenteils in bekannter Art nach der Trennstelle angeordneten Werkstückanschlag (70) sowie mit der Trennstation (22,74,115) gekoppelt ist, und für die Steuerung dieser Bestandteile (50,70) herangezogen wird.

Fig 1

Fig 2

# Fig 3 I

$-\frac{2}{10}$

# Fig 3 II

$$2L - 2l_k > R > 2l_k \qquad (1)$$

$$2L\ 2l \geqslant R \geqslant 2l \qquad (2)$$

$$L + v > R \geqslant L - v \qquad (3)$$

$$R = [L + v] \qquad (4)$$

$$L - l > r > l \qquad (6)$$

$$L + l \geqslant R \geqslant L - l \qquad (7)$$

$$R = [L \pm l] \qquad (8)$$

$$(13)$$

$$L + l \geqslant R \geqslant L + t \qquad L - t \geqslant R \geqslant L - l \qquad (15)$$

Fig.5

56   58   60   ← 50

α1

54

52

56   60   58

50 →   α1   α2

54

52

68  54  58  22

70   70

56

18

Fig.6

52

66

64

70  54  50

68  58  22

56   52

28   20

30   12

26

18   24   16

32

62   34   36

72

46   44

42   48

38

40

Fig.4

0065933

# Fig 7

Fig 8

- 6/10 -

Fig 9

a)

b)

c)

d)

Fig. 10

0065933

Fig. 11

$-\dfrac{8}{10}$

0065933

Fig.12

Fig.13

Fig. 14